# EUROPEAN PATENT APPLICATION

(11) **EP 3 957 603 A1**
(43) Date of publication of application: **23.02.2022**
(21) Application number: 19925079.6
(22) Date of filing: 17.09.2019
(51) Int. Cl.: C01B 39/24, B01J 29/08

(54) **HIGH-SILICA Y MOLECULAR SIEVE HAVING FAU TOPOLOGY AND PREPARATION METHOD THEREFOR**

(30) Priority: 18.04.2019 CN 201910312157; 18.04.2019 CN 201910312367; 18.04.2019 CN 201910312333; 18.04.2019 CN 201910312310
(71) Applicant: Dalian Institute of Chemical Physics, Chinese Academy of Sciences, Dalian, Liaoning 116023 (CN)
(72) Inventor: TIAN, Peng, Dalian, Liaoning 116023 (CN); ZHU, Dali, Dalian, Liaoning 116023 (CN); LIU, Zhongmin, Dalian, Liaoning 116023 (CN); WANG, Linying, Dalian, Liaoning 116023 (CN); ZHANG, Jianming, Dalian, Liaoning 116023 (CN); ZHAO, Xuebin, Dalian, Liaoning 116023 (CN)
(74) Representative: Ter Meer Steinmeister & Partner
(86) International application number: PCT/CN2019/106165
(87) International publication number: WO 2020/211281

(57) **Abstract**

Disclosed in the present application is a high-silica Y molecular sieve having FAU topology. The anhydrous chemical constitution of the molecular sieve is as shown in formula I: kM·mR1·nR2·(SiₓAl_{y})O₂ Formula I; wherein, M is at least one of alkali metal elements; R1 and R2 represent organic templating agent agents; k represents the numbers of moles of the alkali metal element corresponding to per mole of (SiₓAl_{y})O₂, k=0∼0.20; m and n represent the numbers of moles of templating agents R1 and R2 corresponding to per mole of (SiₓAl_{y})O₂ , m=0∼0.20, n=0.01∼0.20; x, y respectively represents the mole fraction of Si and Al, 2x/y=7-40, and x+y=1; R1, R2 are independently selected from one of nitrogen-containing heterocyclic compounds and their derivatives, and quaternary ammonium compounds. Also disclosed in the present application is a synthesis method for the high-silica Y molecular sieve having FAU topology.

## Description

### FIELD

The present invention relates to a high-silica Y molecular sieve having FAU topology and a method for synthesizing high-silica Y molecular sieve by introducing organic templating agent into synthetic gel system and adding silica-alumina molecular sieve having FAU or EMT topology as seed crystal, and further relates to a method for synthesizing high-silica Y molecular sieve by introducing organic templating agent into synthetic gel system and adding directing agent solution. The present invention belongs to the field of catalyst preparation.

### BACKGROUND

Y zeolite is a silica-alumina zeolite having FAU topology. It is mainly used in fluid catalytic cracking (FCC) and is currently the most used zeolite material. The framework silica-alumina ratio of Y molecular sieve plays a decisive role in its catalytic performance. The higher the silica-alumina ratio, the better the catalytic activity and stability. The high-silica Y zeolite currently used in industry is mainly obtained by chemical/physical dealumination, etc. This post-treatment process is cumbersome, energy-consuming, and polluting. The direct hydrothermal synthesis effectively avoids the above shortcomings while maintaining the completeness and uniformity of aluminum distribution of the crystal structure. Therefore, exploring the direct synthesis of Y molecular sieve having high silica-alumina ratio is of great significance to the catalytic cracking process.

For the direct synthesis of high-silica Y molecular sieve, people initially synthesize in non-templating agent system. That is, people do not add any organic templating agent to reaction gel, and only adjust the proportioning of the gel, adjust the crystallization time, seed crystal or inorganic directing agent so as to expect to achieve the purpose of increasing the silica-alumina ratio of the Y molecular sieve. However, limited success is achieved, and the silica-alumina ratio is difficult to reach 6.

The use of organic templating agent has brought the synthesis of Y molecular sieve into a new field. In 1987, US Patent US4174601 disclosed a FAU homogeneous polymorph named ECR-4 with a silica-alumina ratio of greater than 6, which was prepared by hydrothermal crystallization at a temperature ranging from 70 °C to 120 °C using alkyl or hydroxyalkyl quaternary ammonium salt as templating agent in the presence of seed crystal. In 1990, US patent US 4931267 disclosed a FAU homogeneous polymorph named ECR-32 with a silica-alumina ratio of greater than 6 and high thermal stability, which was prepared by hydrothermal crystallization at a temperature ranging from 90 °C to 120 °C using tetrapropyl and/or tetrabutylammonium hydroxide as templating agent.

In 1990, French Delprato et al. (Zeolites. 1990,10(6):546-552) used crown ether as templating agent to synthesize FAU zeolite with cubic structure for the first time. The framework silica-to-aluminum ratio is close to 9.0, which is the highest value currently reported in the literatures. However, the expensive and highly toxic crown ether limits its industrial application. Later, the US patent US5385717 used polyethylene oxide as templating agent to synthesize Y zeolite with a silica-alumina ratio of greater than 6.

### SUMMARY

According to one aspect of the present application, there is provided a high-silica Y molecular sieve having FAU topology.

The high-silica Y molecular sieve having FAU topology is characterized in that the anhydrous chemical constitution of the molecular sieve is as shown in formula I:

kM·mR1·nR2·(SiₓAl_{y})O₂ Formula I

wherein, M is at least one of alkali metal elements;
R1 and R2 represent organic templating agents;
k represents the number of moles of alkali metal element M per mole (SiₓAl_{y})O₂, k-0-0.20;
m and n represent the number of moles of templating agents R1 and R2 per mole of (SiₓAl_{y})O₂, m=0∼0.20, n=0.01∼0.20;
x and y respectively represent the mole fractions of Si and Al, 2x/y=7~40, and x+y=l;
R1 and R2 are independently one of nitrogen-containing heterocyclic compounds and derivatives thereof, and quaternary ammonium compounds;
the structural formula of the quaternary ammonium compound is as shown in formula II; 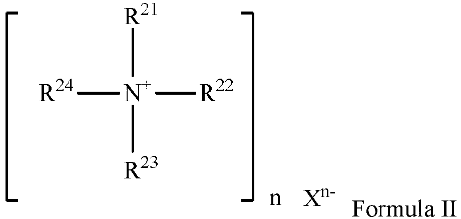 wherein, in formula II, R²¹, R²², R²³ and R²⁴ are independently at least one of Cₗ-C₁₂ alkyl, Cₗ-C₁₂ alkoxy, Cₗ-C₁₂ hydroxyalkyl, aryl and adamantyl;
Xⁿ⁻ is one of OH⁻, Cl⁻, Br⁻, I⁻, N0₃⁻, HS0₄⁻, H₂P0₃⁻, S0₄²⁻, HP0₃²⁻, and PO₃³⁻.

Optionally, m=0.01-0.20.

Optionally, k=0. 0 1-0. 15; m=0.01∼0.1; n=0.02-0.15.

Optionally, k=0.02~0.13; m=0.01∼0.04; n=0.03-0.08.

Optionally, the "C₁∼C₁₂ alkyl" includes "CrC₁₂ phenyl alkyl".

Optionally, the "aryl" includes "C₇∼C₁₂ aryl".

Optionally, the "CrC₁₂ aryl" includes "C₇∼C₁₂ alkyl aryl".

Optionally, M is at least one of Na, K, and Cs, and 2x/y=7∼30.

Optionally, M is at least one of Na, K, and Cs, and 2x/y=8∼30.

Optionally, the upper limit of 2x/y is 8, 9, 10, 11, 12, 13, 14, 15, 16, 17, 18, 19, 20, 22, 23, 24, 25, 26, 27, 28, 29 or 30, and the lower limit thereof is 7, 8, 9, 10, 11, 12, 13, 14, 15, 16, 17, 18, 19, 20, 22, 23, 24, 25, 26, 27, 28 or 29.

Optionally, R1 and R2 are independently one of quaternary ammonium compounds.

Optionally, R1 and R2 are independently at least one of tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutylammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

Optionally, R1 is at least one of tetramethylammonium hydroxide, tetraethylammonium hydroxide, tetrapropylammonium hydroxide and choline;
R2 is at least one of tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutyl ammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

Optionally, R1 is at least one of quaternary ammonium compounds; and R2 is at least one of nitrogen-containing heterocyclic compounds and derivatives thereof.

Optionally, R1 is at least one of tetramethylammonium hydroxide, tetraethylammonium hydroxide, tetrapropylammonium hydroxide and choline;
R2 is at least one of nitrogen-containing heterocyclic compounds and derivatives thereof.

Optionally, R2 is at least one of pyridine, N-methylpyridine, N-ethylpyridine, N-propylpyridine, N-butylpyridine, N-ethyl-3-butylpyridine, 1-ethyl-2-propylpyridine hydroxide, piperidine, N,N-dimethylpiperidine, N,N-dimethyl-3,5-diethylpiperidine hydroxide, N,N-dimethyl-3,5-dipropylpiperidine hydroxide, N,N-diethyl-3,5-dipropylpiperidine hydroxide, N,N-diethyl-2,6-dimethylpiperidine hydroxide, N,N-dimethyl-2,6-diethylpiperidine hydroxide, imidazole, 1-ethyl-3-butylimidazole hydroxide, l-ethyl-3-butyl-4-propylimidazole hydroxide, 1-benzyl-3-methylimidazole hydroxide, 1-benzyl-3-ethylimidazole hydroxide, 1-benzy|-3-buty|imidazole hydroxide, piperazine, N-methylpiperazine, 1,4-dipropylpiperazine, 1-methyl-4-ethylpiperazine, and 1-ethyl-4-butyl-5-methylpiperazine.

Optionally, the high-silica Y molecular sieve having FAU topology is an octahedral structure.

Optionally, the particle size of the high-silica Y molecular sieve having FAU topology ranges from 50 nm to 2500 nm.

According to another aspect of the present application, there is provided a method for synthesizing high-silica Y molecular sieve having FAU topology, by using silica-alumina molecular sieve having FAU or EMT topology as seed crystal and introducing organic templating agent under alkaline hydrothermal conditions. A high-silica (silica-alumina molar ratio in a range from 7 to 40) Y molecular sieve is synthesized.

The method for synthesizing high-silica Y molecular sieve having FAU topology is characterized in that it comprises the following steps:
a) mixing raw materials containing aluminum source, silicon source, alkali metal source, organic templating agent R and water to prepare an initial gel mixture I, wherein the aluminum source, silicon source, alkali metal source, organic templating agent R and water in the raw materials have the following molar ratios:
   SiO₂/Al2O₃₌10~200;
   M₂0/AI₂0₃₌0-3 0, wherein M is at least one of alkali metal elements;
   R/Al₂0₃₌1-45;
   H₂O/Al₂O₃=50∼8000;
b) adding silica-alumina molecular sieve seed crystal having FAU or EMT topology to the initial gel mixture I obtained in step a) to obtain a mixture II;
c) placing the mixture II obtained in step b) in a sealed reactor to perform crystallization to obtain the high-silica Y molecular sieve having FAU topology;
wherein, the number of moles of silicon source is calculated by Si0₂; the number of moles of aluminum source is calculated by Al₂O₃; the number of moles of templating agent R is calculated by the number of moles of R itself; and the number of moles of alkali metal source is calculated by the number of moles of corresponding metal oxide M₂O.

Optionally, in step a), H₂O/Al₂O₃=50~6000.

Optionally, in step a), H₂O/Al₂O₃=100∼8000.

Optionally, in step a), R/Al₂O₃=0.1∼40.

Optionally, the organic templating agent R in step a) is at least one of nitrogen-containing heterocyclic compounds and derivatives thereof, and quaternary ammonium compounds;
the structural formula of the quaternary ammonium compound is as shown in formula II;

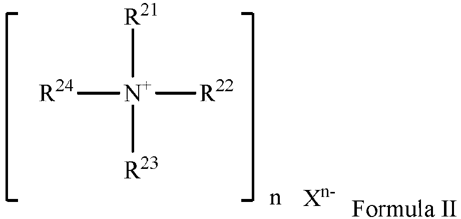

In formula II, R²¹, R²², R²³ and R²⁴ are independently at least one of Cₗ-C₁₂ alkyl, C ~C ₂ alkoxy, C ~C ₂ hydroxyalkyl, aryl and adamantyl;
Xⁿ⁻ is one of OH⁻, Cl⁻, Br⁻, I⁻, N0₃⁻, HS0₄⁻, H₂PO₃, SO₄²⁻, HPO₃²⁻, and PO₃³⁻.

Optionally, the organic templating agent R in step a) is at least one of tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutyl ammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

Optionally, the nitrogen-containing heterocyclic templating agent R in step a) is at least one of nitrogen-containing heterocyclic compounds and derivatives thereof.

Optionally, in step a), the nitrogen-containing heterocyclic templating agent R is at least one of pyridine, N-methylpyridine,N-ethylpyridine,N-propylpyridine,N-butylpyridine,N-ethyl-3-butylpy ridine, 1-ethyl-2-propylpyridine hydroxide,piperidine, N,N-dimethylpiperidine, N,N-dimethyl-3,5-diethylpiperidine hydroxide,N,N-dimethyl-3,5-dipropylpiperidine hydroxide,N,N-diethyl-3,5-dipropylpiperidine hydroxide,N,N-diethyl-2,6-dimethylpiperidine hydroxide, N,N-dimethyl-2,6-diethylpiperidine hydroxide,imidazole,l-ethyl-3-butylimidazole hydroxide,1-ethyl-3-butyl-4-propylimidazole hydroxide, 1-benzyl-3-methylimidazole hydroxide, 1-benzyl-3-ethylimidazole hydroxide, 1-benzyl-3-butylimidazole hydroxide, piperazine,N-methylpiperazine, 1,4-dipropylpiperazine, 1 -methyl-4-ethylpiper azine,andl-ethyl-4-butyl-5-methylpiperazine.

Optionally, the silicon source in step a) is at least one of methyl orthosilicate, ethyl orthosilicate, silica sol, solid silica gel, fumed silica, and sodium silicate;
the aluminum source in step a) is at least one of sodium aluminate, aluminum oxide, aluminum hydroxide, aluminum isopropoxide, aluminum 2-butoxide, aluminum chloride, aluminum sulfate, aluminum nitrate, and pseudo-boehmite;
the alkali metal source in step a) is at least one of sodium hydroxide, potassium hydroxide, and cesium hydroxide.

Optionally, step a) comprises mixing the aluminum source, the alkali metal source, the organic templating agent R and water, and then adding the silicon source to mix to obtain an initial gel mixture I.

Optionally, the aluminum source, silicon source, alkali metal source, organic templating agent R and water in the raw materials in step a) have the following molar ratios:
Si0₂ /A1₂0₃ =10-200;
M₂0/AI₂0₃₌0-30, wherein M is at least one of alkali metal elements;
R/Al₂O₃=1∼45;
H₂O/Al₂O₃=100∼6000.

Optionally, the upper limit of Si0₂/AI₂0₃ is 15, 20, 30, 40, 45, 50, 60, 70, 80, 90, 100, 110, 120, 130, 140, 150, 160, 170, 180, 190 or 200, and the lower limit thereof is 10, 15, 20, 30, 40, 45, 50, 60, 70, 80, 90, 100, 110, 120, 130, 140, 150, 160, 170, 180 or 190.

Optionally, the upper limit of M₂O/Al₂O₃ is 1.8, 2.0, 3.0, 4.0, 4.5, 4.8, 5.0, 6.0, 7.0, 8.0, 9.0, 10, 11, 12, 13, 14, 15, 16, 17, 18, 19, 20, 22, 25, 28, 29 or 30; the lower limit thereof is 0.1, 1.8, 2.0, 3.0, 4.0, 4.5, 4.8, 5.0, 6.0, 7.0, 8.0, 9.0, 10, 11, 12, 13, 14, 15, 16, 17, 18, 19, 20, 22, 25, or 28.

Optionally, the upper limit of the molar ratio of R/Al₂O₃ is 2, 3, 3.6, 4, 4.5, 4.8, 5, 5.2, 6, 7, 8, 9, 10, 11, 12, 13, 14, 15, 16, 17, 18, 19, 20, 22, 25, 28, 29, 30, 32, 35, 38, 40, 42 or 45; the lower limit thereof is 1, 2, 3, 3.6, 4, 4.5, 4.8, 5, 5.2, 6, 7, 8, 9, 10, 11, 12, 13, 14, 15, 16, 17, 18, 19, 20, 22, 25, 28, 29, 30, 32 , 35, 38, 40, or 42.

Optionally, the upper limit of the molar ratio of H₂O/Al₂O₃ is 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3200, 3500, 3800, 4000, 5000 or 6000; the lower limit thereof is 100, 200, 300, 400, 500 , 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000 , 3200, 3500, 3800, 4000 or 5000. Optionally, in step b), the silica-alumina molecular sieve seed crystal having FAU or EMT topology is added to the initial gel mixture I obtained in step a), and after stirring and mixing, the mixture II is obtained.

Optionally, in step b), the stirring is performed for 1 to 48 hours.

Optionally, the upper limit of the stirring time in step b) is 48 hours, 44hours, 40 hours, 36 hours, 32 hours, 28 hours, 24 hours, 20 hours, 16 hours, 12 hours, 8 hours, 4 hours, or 2 hours; the lower limit thereof is 1hour, 2 hours, 4 hours, 8 hours, 12 hours, 16 hours, 20 hours, 24 hours, 28 hours, 32 hours, 36 hours, 40 hours or 44 hours.

Optionally, the weight ratio of silica alumina molecular sieve seed crystal having FAU or EMT topology added in the mixture II in step b), to the silicon source in the initial gel mixture I ranges from 0.01:1 to 0.3:1;
wherein, the weight of the silicon source in the initial gel mixture I is calculated by the weight of Si0₂.

Optionally, the silica-alumina molar ratio Si0₂/AI₂0₃ of the silica-alumina molecular sieve seed crystal having FAU or EMT topology in step b) is 2-oo.

Optionally, the silica-alumina molar ratio SiO₂/Al₂O₃ of the silica-alumina molecular sieve seed crystal having FAU or EMT topology in step b) ranges from 2.5 to 200.

Optionally, a crystallization temperature in step c) ranges from 90 to 180 °C, and a crystallization time in step c) ranges from 0.1 to 15 days.

Optionally, the upper limit of the crystallization temperature in step c) is 100 °C, 120 °C, 140 °C, 160 °C or 180 °C, and the lower limit thereof is 80 °C, 90 °C, 100 °C, 110 °C, 120 °C, 140 °C or 160 °C.

Optionally, the upper limit of crystallization time in step c) is 0.1 day, 0.5 day, 1 day, 1.5 days, 2.5 days, 4 days, 5 days or 6 days, and the lower limit thereof is 2 days, 4 days, 5 days, 6 days, 7 days, 8 days, 9 days or 10 days.

Optionally, the upper limit of the silica-alumina molar ratio SiO₂/Al₂O₃ of the silica-alumina molecular sieve seed crystal having FAU or EMT topology in step b) is 2.5, 3, 4, 5, 6, 7, 8. 9, 10, 11, 12, 13, 14, 15, 16, 17, 18, 19, 20, 21, 22, 23, 24, 25, 26, 27, 28, 29 or 30; the lower limit thereof is 2.2, 3, 4, 5, 6, 7, 8, 9, 10, 11, 12, 13, 14, 15, 16, 17, 18, 19, 20, 21, 22, 23, 24, 25, 26, 27, 28 or 29.

Optionally, the silica-alumina molar ratio Si0₂/AI₂0₃ of the silica-alumina molecular sieve seed crystal having FAU or EMT topology in step b) ranges from 3 to 10.

Optionally, the crystallization in step c) is performed dynamically or statically.

Optionally, the crystallization in step c) is rotational crystallization.

Optionally, in step c), after the crystallization is completed, the obtained solid product is filtered, washed and dried to obtain the high-silica Y molecular sieve.

In the method, washing, filtering, separating and drying the obtained Y molecular sieve are all conventional operations, wherein the drying can be performed by placing the separated Y molecular sieve at a temperature ranging from 100 to 110 °C for 12 hours.

In a specific embodiment, the synthesis process of the high-silica Y molecular sieve is as follows:
a1) preparation of synthetic gel: mixing and stirring aluminum source, silicon source, alkali metal source (M), nitrogen-containing heterocyclic templating agent R and deionized water according to following molar ratio 1Al₂O₃: (10-200) Si0₂: (0.1-25) M₂O:(1~45) R:(50∼6000) H₂O uniformly at room temperature to prepare the initial gel, then adding a certain amount of seed crystal therein, and stirring the obtained mixture for a time ranging from 1 to 48 hours to obtain the synthetic gel;
b1) synthesis of high-silica Y molecular sieve: performing crystallization of the above synthetic gel under the autogenous pressure and a temperature ranging from 90 to 180°C for a time ranging from 0.2 to 15 days, and after the crystallization is completed, filtering and separating the obtained solid product, washing the solid product with deionized water to be neutrality, and drying the solid product to obtain the high-silica Y molecular sieve.

As a specific embodiment, the method comprises following steps:
a) mixing aluminum source, silicon source, alkali metal source, organic templating agent R and water as raw materials to prepare the initial gel mixture I, wherein the aluminum source, silicon source, alkali metal source, organic templating agent R and water in the raw materials have the following molar ratios:
   Si0₂ /A1₂0₃ =10-200;
   M₂0/AI₂0₃₌0-30, wherein M is at least one of alkali metal elements;
   R/A1₂0₃₌1-45;
   H₂O/Al₂O₃=100∼8000;
b) adding silica-alumina molecular sieve seed crystal having FAU or EMT topology to the initial gel mixture I obtained in step a) to obtain a mixture II;
c) placing the mixture II obtained in step b) in a sealed reactor to perform crystallization, wherein a crystallization temperature ranges from 80 to180°C, the crystallization pressure is autogenous pressure, and a crystallization time ranges from 0.1 to15 days; and after the crystallization is completed, separating, washing and drying the obtained product to obtain the high-silica Y molecular sieve having FAU topology;
   wherein, the number of moles of silicon source is calculated by Si0₂; the number of moles of aluminum source is calculated by Al₂O₃; the number of moles of templating agent R is calculated by the number of moles of R itself; and the number of moles of alkali metal source is calculated by the number of moles of corresponding metal oxide M₂O.

As an embodiment, the synthesis process of the high-silica Y molecular sieve having FAU topology is as follows:
a) preparation of the initial gel mixture: mixing and stirring uniformly aluminum source, silicon source, alkali metal source, organic templating agent R and deionized water at room temperature to prepare the initial gel mixture according to the following ratio:
   Si0₂ /A1₂0₃ =10-200;
   M₂O/Al₂O₃=0∼30, wherein M is at least one of alkali metal elements;
   R/Al₂O₃=1~45;
   H₂O/A1₂O₃₌100-8000;
b) adding silica-alumina molecular sieve seed crystal having FAU or EMT topology to the initial gel mixture obtained in step a), and then stirring uniformly, wherein the weight ratio of the added seed crystal to the silicon source in the initial gel mixture ranges from 0.01:1 to 0.3: 1;
c) performing crystallization of the mixture obtained in step b) under the autogenous pressure and a temperature ranging from 80 to 180°C for a time ranging from 0.1 to 15 days, and after the crystallization is completed, filtering and separating the obtained solid product, washing the solid product with deionized water to be neutrality, and drying the solid product to obtain the high-silica Y molecular sieve.

According to further aspect of the present application, a directing agent method for synthesizing high-silica Y molecular sieve having FAU topology is provided.

The method for synthesizing high-silica Y molecular sieve having FAU topology is characterized in that it comprises the following steps:
a) mixing the raw materials I containing aluminum source A¹, silicon source Si¹, alkali metal source M¹, organic templating agent R¹ and water, and aging to obtain a directing agent
   wherein, the aluminum source A¹, silicon source Si¹, alkali metal source M¹, organic templating agent R¹ and water in the raw materials I have the following molar ratios:
   Si0₂ /A1₂0₃ =5-30;
   M¹₂O/Al₂O₃=0∼7, wherein M¹ is at least one of alkali metal elements;
   R¹/Al₂O₃=1∼40;
   H₂O/Al₂O₃=100∼600;
b) mixing raw materials II containing aluminum source A², silicon source Si², alkali metal source M², organic templating agent R², and water to prepare an initial gel;
   wherein, the aluminum source A², silicon source Si², alkali metal source M², organic templating agent R² and water in the raw materials II have the following molar ratios:
   SiO₂/Al₂O₃ =10-200;
   m² ₂0/AI₂0₃₌0-30, wherein M² is at least one of alkali metal elements;
   R²/A1₂0₃ =1~45;
   H₂O/Al₂O₃=100∼8000;
c) adding the directing agent in step a) to the initial gel in step b) and, after mixing uniformly, placing the obtained mixture in a sealed reactor for crystallization to obtain the high-silica Y molecular sieve having FAU topology;
   wherein, the number of moles of silicon source Si¹ and Si² is respectively calculated by Si0₂; the number of moles of aluminum source A¹ and A² is respectively calculated by Al₂O₃; the number of moles of templating agent R¹ and R² is respectively calculated by the number of moles of themselves; and the number of moles of alkali metal source M¹ and M² is respectively calculated by the number of moles of corresponding metal oxide M¹₂O and M²₂O.

Optionally, the aluminum source A¹, silicon source Si¹, alkali metal source M¹, organic templating agent R¹ and water in the raw materials I in step a) have the following molar ratios:
Si0₂ /A1₂0₃ =5-30;
M¹₂O/Al₂O₃=0∼3, wherein M¹ is at least one of alkali metal elements;
R7A1₂O₃₌5~40;
H₂O/AI₂O₃₌1 00-600.

Optionally, the upper limit of the molar ratio of Si0₂ /A1₂0₃ is 6.0, 7.0, 8.0, 9.0, 10, 11, 12, 13, 14, 15, 20 or 30, and the lower limit thereof is 5.0, 6.0, 7.0, 8.0, 9.0, 10, 11, 12, 13, 14, 15 or 20.

Optionally, the upper limit of the molar ratio of M₂O/Al₂O₃ in step a) is 0.5, 1.8, 2.0, 3.0, 4.0, 4.5, 4.8 or 5.0, and the lower limit thereof is 0.1, 0.5, 1.8, 2.0, 3.0, 4.0, 4.5 or 4.8.

Optionally, the upper limit of the molar ratio of R/Al₂O₃ in step a) is 2, 3, 4, 5, 6, 7, 8, 9, 10, 11, 12, 13, 14, 15, 16, 17, 18, 19, 20, 22, 25, 28, 29, 30, 32, 35, 34, 38 or 40, and the lower limit thereof is 1, 2, 3, 4, 5, 6, 7, 8, 9, 10, 11, 12, 13, 14, 15, 16, 17, 18, 19, 20, 22, 25, 28, 29, 30, 32, 35, 34, or 38.

Optionally, the upper limit of the molar ratio of H₂O/Al₂O₃ in step a) is 150, 180, 200, 250, 300, 350, 400, 450, 500, 550 or 600, and the lower limit thereof is 100, 150, 180, 200, 250, 300, 350, 400, 450, 500, or 550.

Optionally, the silicon sources Si¹ and Si² in step a) and step b) are independently at least one of methyl orthosilicate, ethyl orthosilicate, silica sol, solid silica gel, fumed silica, and sodium silicate;
the aluminum sources A¹ and A² in step a) and step b) are independently at least one of sodium aluminate, aluminum oxide, aluminum hydroxide, aluminum isopropoxide, aluminum 2-butoxide, aluminum chloride, aluminum sulfate, aluminum nitrate and pseudo-boehmite;
the alkali metal sources M¹ and M² in step a) and step b) are independently at least one of sodium hydroxide, potassium hydroxide, and cesium hydroxide.

Optionally, the organic templating agents R¹ and R² in step a) and step b) are independently one of nitrogen-containing heterocyclic compounds and derivatives thereof, and quaternary ammonium compounds;
the structural formula of the quaternary ammonium compound is as shown in formula II; 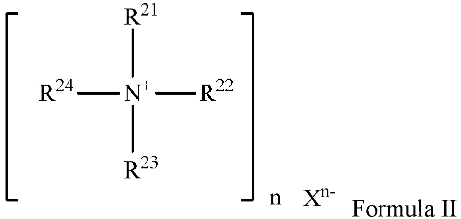 wherein, in formula II, R²¹, R²², R²³ and R²⁴ are independently at least one of Cₗ-C₁₂ alkyl , Ci-Ci₂ alkoxy, Ci-Ci₂ hydroxyalkyl, aryl and adamantyl; Xⁿ⁻ is one of OH⁻, Cl⁻, Br⁻, I⁻, N0₃⁻, HS0₄⁻, H₂PO₃⁻, SO₄²-, HPO₃²-, and PO₃³⁻.

Optionally, R¹ and R² are independently at least one of tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutylammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

Optionally, R¹ is at least one of tetramethylammonium hydroxide, tetraethylammonium hydroxide, tetrapropylammonium hydroxide and choline;
R² is at least one of tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutylammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

Optionally, R¹ is one of quaternary ammonium compounds;
the structural formula of the quaternary ammonium compound is as shown in formula II; 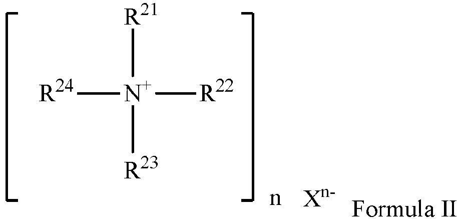 in formula II, R²¹, R²², R²³ and R²⁴ are independently at least one of Cₗ-C₁₂ alkyl, Cₗ-C₁₂ alkoxy, Cₗ-C₁₂ hydroxyalkyl, aryl and adamantyl; Xⁿ⁻ is one of OH⁻, Cl⁻, Br⁻, I⁻, NO³⁻, HS0₄⁻, H₂PO₃⁻, SO₄²⁻, HP0₃²⁻, and P0₃³⁻;
R² is at least one of nitrogen-containing heterocyclic compounds and derivatives thereof.

Optionally, R¹ is at least one of tetramethylammonium hydroxide, tetraethylammonium hydroxide, tetrapropylammonium hydroxide and choline.

Optionally, R² is at least one of pyridine, N-methylpyridine, N-ethylpyridine, N-propylpyridine, N-butylpyridine,N-ethyl-3-butylpyridine,1-ethyl-2-propylpyridine hydroxide,piperidine, N,N-dimethylpiperidine,N,N-dimethyl-3,5-diethylpiperidine hydroxide, N, N-dimethyl-3,5-dipropylpiperidine hydroxide,N,N-diethyl-3,5-dipropylpiperidine hydroxide, N,N-diethyl-2,6-dimethylpiperidine hydroxide, N,N-dimethyl-2,6-diethylpiperidine hydroxide, imidazole, 1-ethyl-3-butylimidazole hydroxide, l-ethyl-3-butyl-4-propylimidazole hydroxide, 1-benzyl-3-methylimidazole hydroxide, 1-benzyl-3-ethylimidazole hydroxide, 1-benzyl-3-butylimidazole hydroxide, piperazine, N-methylpiperazine, 1,4-dipropylpiperazine, 1-methyl-4-ethylpiperazine, and 1-ethyl-4-butyl-5-methylpiperazine.

Optionally, an aging temperature in step a) ranges from 25 to 140 °C for an aging time in a range from 0.5 to 30 days.

Optionally, the upper limit of the aging temperature is 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, 110 °C, 120 °C, 130 °C or 140 °C, and the lower limit thereof is 20 °C, 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, 110 °C, 120 °C, or 130 °C.

Optionally, the upper limit of aging time is 1day, 2 days, 3 days, 4 days, 5 days, 6 days, 7 days, 8 days, 9 days, 10 days, 11 days, 12 days, 13 days, 14 days, 15 days, 18 days, 20 days, 25 days or 30 days, and the lower limit thereof is 0.5 day, 1day, 2 days, 3 days, 4 days, 5 days, 6 days, 7 days, 8 days, 9 days, 10 days, 11 days, 12 days, 13 days, 14 days, 15 days, 18 days, 20 days or 25 days.

Optionally, an aging temperature in step a) ranges from 25 to 140 °C for an aging time in a range from 1 to 30 days.

Optionally, an aging temperature in step a) ranges from 30 to 120 °C for an aging time in a range from 1 to 25 days.

Optionally, the aging in step a) is a two-stage aging, the temperature for the first stage aging ranges from 30 to 40 °C, the time for the first stage aging ranges from 0.5 to 5 days while the temperature for the second stage aging ranges from 50 to 100 °C, and the time for first-stage aging ranges from 2 to 8 days.

Optionally, step a) comprises: mixing the aluminum source A¹, the alkali metal source M¹, the organic templating agent R¹ and water uniformly, adding the silicon source S¹ therein, stirring, mixing and then aging, wherein an aging temperature ranges from 25 to 140 °C, and an aging time ranges from 1 to 30 days to obtain the directing agent.

Optionally, the aluminum source A², the silicon source Si², the alkali metal source M², the organic templating agent R², and water in step b) have the following molar ratios:
Si0₂ /A1₂0₃ =10-200;
m² ₂0/AI₂0₃₌0-30, wherein M² is at least one of alkali metal elements;
R²/A1₂0₃ =1-45;
H₂O/A1₂O₃₌100~6000.

Optionally, the aluminum source A², silicon source Si², alkali metal source M², organic templating agent R², and water in the raw material II in step b) have the following molar ratios:
SiO₂/Al₂O₃=10∼200;
m² ₂0/AI₂0₃₌0-30, wherein M² is at least one of alkali metal elements;
R²/A1₂0₃ =1-45;
H₂O/Al₂O₃=100∼4000.

Optionally, the upper limit of the molar ratio of Si0₂ /A1₂0₃ in step b) is 15, 20, 30, 40, 45, 50, 60, 70, 80, 90, 100, 110, 120, 130, 140, 150, 160, 170, 180, 190 or 200; and the lower limit thereof is 10, 15, 20, 30, 40, 45, 50, 60, 70, 80, 90, 100, 110, 120, 130, 140, 150, 160, 170, 180, or 190.

Optionally, the upper limit of the molar ratio of M₂O/Al₂O₃ in step b) is 1.8, 2.0, 3.0, 4.0, 4.5, 4.8, 5.0, 6.0, 7.0, 8.0, 9.0, 10, 11, 12, 13, 14, 15, 16, 17, 18, 19, 20, 22, 25, 28, 29 or 30, and the lower limit thereof is 0.1, 1.8, 2.0, 3.0, 4.0, 4.5, 4.8, 5.0, 6.0, 7.0, 8.0, 9.0, 10, 11, 12, 13, 14, 15, 16, 17, 18, 19, 20, 22, 25, or 28.

Optionally, the upper limit of the molar ratio of R/Al₂O₃ in step b) is 2, 3, 3.6, 4, 4.5, 4.8, 5, 5.2, 6, 7, 8, 9, 10, 11, 12, 13, 14, 15, 16, 17, 18, 19, 20, 22, 25, 28, 29, 30, 32, 35, 38, 40, 42 or 45, and the lower limit thereof is 1, 2, 3, 3.6, 4, 4.5, 4.8, 5, 5.2, 6, 7, 8, 9, 10, 11, 12, 13, 14, 15, 16, 17, 18, 19, 20, 22, 25, 28, 29, 30, 32, 35, 38, 40, or 42.

Optionally, the upper limit of the molar ratio of H₂O/Al₂O₃ in step b) is 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3200, 3500, 3800, 4000, 5000 or 6000, and the lower limit thereof is 100, 200, 300 , 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800 , 2900, 3000, 3200, 3500, 3800, 4000 or 5000.

Optionally, the weight ratio of the silica in the directing agent to the silica in the initial gel in step c) ranges from 0.01:1 to 0.3:1.

Optionally, the weight ratio of the silica in the directing agent to the silica in the initial gel in step c) is any one of the following ratios or a range ratio defined by any two ratios:0.01:1, 0.02:1, 0.03:1, 0.04:1, 0.05:1, 0.06:1, 0.07:1, 0.08:1, 0.09:1, 0.1:1, 0.11:1, 0.12:1, 0.13:1, 0.14:1, 0.15:1, 0.16:1, 0.20: 1, 0.25:1, 0.30:1.

Optionally, the weight ratio of the silica in the directing agent to the silica in the initial gel in step c) ranges from 0.01:1 to 0.3:1.

Optionally, the weight ratio of the silica in the directing agent to the silica in the initial gel in step c) ranges from 0.01:1 to 0.2:1.

Optionally, a crystallization temperature in step c) ranges from 90 to 180 °C for the crystallization time in a range from 1 to 15 days.

Optionally, the upper limit of the crystallization temperature is 100 °C, 120 °C, 140 °C, 160 °C, or 180 °C, while the lower limit of the crystallization temperature is 90 °C, 100 °C, 110 °C, 140 °C, or 150 °C.

Optionally, the upper limit of the crystallization time in step c) is 2 days, 3 days, 4 days, 5 days, 6 days, 7 days, 8 days, 9 days, 10 days, 11 days, 12 days, 13 days, 14 days or 15 days, and the lower limit thereof is 2 days, 3 days, 4 days, 5 days, 6 days, 7 days, 8 days, 9 days, 10 days, 11 days, 12 days, 13 days or 14 days.

Optionally, a crystallization temperature in step c) ranges from 90 to 140 °C for the crystallization time in a range from 3 to 15 days.

Optionally, the crystallization in step c) is performed dynamically or statically.

Optionally, the crystallization in step c) is performed in a combination of dynamical and statical manners.

Optionally, the crystallization in step c) is rotational crystallization.

Optionally, step c) includes: adding the directing agent in step a) to the initial gel in step b), stirring and mixing, and then placing the obtained mixture in a sealed reactor to perform crystallization to obtain the high-silica Y molecular sieve having FAU topology.

Optionally, in step c), the stirring is performed for 1 to 48 hours.

Optionally, the upper limit of the stirring time is 48 hours, 44 hours, 40 hours, 36hours, 32 hours, 28hours, 24 hours, 20 hours, 16 hours, 12hours, 8 hours, 4 hours or 2 hours, and the lower limit thereof is 1hour, 2 hours, 4 hours, 8 hours, 12 hours, 16 hours, 20 hours, 24 hours, 28 hours, 32 hours, 36 hours, 40hours or 44 hours.

Optionally, step c) includes: adding the directing agent in step a) to the initial gel in step b), mixing uniformly and placing the obtained mixture in a sealed reactor to perform crystallization, wherein a crystallization temperature ranges from 90 to 140 °C, and a crystallization time ranges from 3 to 15 days; after the crystallization is completed, separating, washing, and drying the obtained solid to obtain the high-silica Y molecular sieve having FAU topology.

Optionally, the method comprises the following steps:
a) mixing the raw materials I containing aluminum source A¹, silicon source Si¹, alkali metal source M¹, organic templating agent R¹ and water, and aging to obtain a directing agent;
   wherein, the aluminum source A¹, silicon source Si¹, alkali metal source M¹, organic templating agent R¹ and water in the raw materials I have the following molar ratios:
   Si0₂ /A1₂0₃ =5-30;
   M¹₂O/Al₂O₃=0∼5, wherein M¹ is at least one of alkali metal elements;
   R¹/Al₂O₃=5∼40;
   H₂O/Al₂O₃=100∼600;
b) mixing the raw materials II containing aluminum source A², silicon source Si², alkali metal source M², organic templating agent R², and water to prepare the initial gel;
   the aluminum source A², silicon source Si², alkali metal source M², organic templating agent R², and water in the raw materials II have the following molar ratios:
   Si0₂ /A1₂0₃ =10-200;
   M²₂O/Al₂O₃=0∼30, wherein M² is at least one of alkali metal elements;
   R²/A1₂0₃ =1-45;
   H₂O/AI₂O₃₌1 00-6000;
c) adding the directing agent in step a) to the initial gel in step b), mixing uniformly and placing the obtained mixture in a sealed reactor to perform crystallization, wherein a crystallization temperature ranges from 90 °C to 180 °C, and a crystallization time ranges from 2 to 15 days; after the crystallization is completed, separating, washing, and drying the obtained solid to obtain the high-silica Y molecular sieve having FAU topology.
   wherein, the number of moles of silicon source Si¹ and Si² is respectively calculated by Si0₂; the number of moles of aluminum source A¹ and A² is respectively calculated by Al₂O₃; the number of moles of templating agent R¹ and R² is respectively calculated by the number of moles of themselves; and the number of moles of alkali metal source M¹ and M² is respectively calculated by the number of moles of corresponding metal oxide M¹₂O and M²₂O.

As an embodiment, the synthesis process of the high-silica Y molecular sieve is as follows:
a) preparation of directing agent: mixing and stirring aluminum source, silicon source, organic templating agent R¹ and deionized water for 2 hours according to following molar ratio 1Al₂O₃ :(5∼30) SiO₂ :(0∼7) M¹₂O:(1~40) R1 :(100~600) H₂O to obtain a uniform mixture, and then stirring/standing the obtained mixture at a temperature ranging from 25 to 140 °C for a time ranging from 1 to 30 days to obtain the directing agent;
b) preparation of synthetic gel: mixing and stirring aluminum source, silicon source, sodium hydroxide, organic templating agent R² and deionized water according to the following ratio uniformly at room temperature to obtain the initial gel
   SiO₂ /Al₂O₃ =10∼200;
   m² ₂0/AI₂0₃₌0-30, wherein M² is at least one of alkali metal elements;
   R²/Al₂O₃ =1∼45;
   H₂O/Al₂O₃=100∼8000;
   then adding a certain amount of the directing agent in step a) therein and stirring for a time ranging from 1 to 4 hours to obtain the synthetic gel;
c) synthesis of high-silica Y molecular sieve: performing crystallization of the above synthetic gel at a temperature ranging from 90 to 180 °C under autogenous pressure for a time ranging from 2 to 15 days, after the crystallization is completed, filtering and separating the obtained solid product, washing the solid product with deionized water to be neutrality, and drying the solid product to obtain the high-silica Y molecular sieve.

According to another aspect of the present application, there is provided use of the high-silica Y molecular sieve prepared by the above method in fluid catalytic cracking (FCC), wherein the prepared molecular sieve has a high silica alumina oxide ratio ranging from 7 to 30, good hydrothermal/thermal stability, and has good catalytic reaction activity.

The anhydrous chemical constitution of the molecular sieve is shown in formula I:

kM·mR1·nR2·(SiₓAl_{y})O₂ Formula I

wherein, M is at least one of alkali metal elements;
R1 and R2 represent organic templating agents;
k represents the number of moles of alkali metal element M per mole (SiₓAl_{y})O₂, k=0-0.20;
m and n represent the number of moles of templating agents R1 and R2 per mole of (SiₓAl_{y})O₂, m=0∼0.20, n=0.01∼0.20;
x and y respectively represent the mole fractions of Si and Al, 2x/y=7-40, and x+y=1;
R1 and R2 are independently one of nitrogen-containing heterocyclic compounds and derivatives thereof, and quaternary ammonium compounds;
the structural formula of the quaternary ammonium compound is as shown in formula II; 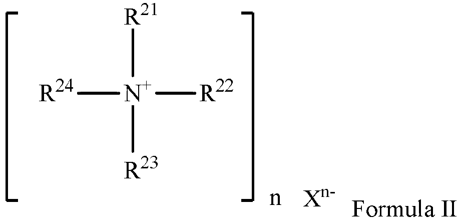 wherein, in formula II, R²¹, R²²,R²³and R²⁴ are independently at least one of Cₗ-C₁₂ alkyl, C₁~C₁₂ alkoxy, C₁∼C₁₂ hydroxyalkyl, aryl and adamantyl;
Xⁿ⁻ is one of OH⁻, Cl⁻, Br⁻, I⁻, N0₃⁻, HS0₄⁻, H2PO₃, SO₄²⁻, HPO₃²⁻, and PO₃³⁻.

Optionally, m=0.01-0.20.

Optionally, k=0.01~0.15; m=0.01∼0.1; n=0.02-0.15.

Optionally, k=0.02∼0.13; m=0.01∼0.04; n=0.03-0.08.

Optionally, the "C₁∼C₁₂ alkyl" includes "C₇∼C₁₂ phenyl alkyl".

Optionally, the "aryl" includes "C₇∼C₁₂ aryl".

Optionally, the "C₇∼C₁₂ aryl" includes "C₇∼C₁₂ alkyl aryl".

Optionally, M is at least one of Na, K, and Cs, and 2x/y=7∼30.

Optionally, M is at least one of Na, K, and Cs, and 2x/y=8~30.

Optionally, the upper limit of 2x/y is 8, 9, 10, 11, 12, 13, 14, 15, 16, 17, 18, 19, 20, 22, 23, 24, 25, 26, 27, 28, 29 or 30, and the lower limit thereof is 7, 8, 9, 10, 11, 12, 13, 14, 15, 16, 17, 18, 19, 20, 22, 23, 24, 25, 26, 27, 28 or 29.

Optionally, R1 and R2 are independently one of quaternary ammonium compounds.

Optionally, R1 and R2 are independently at least one of tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutylammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

Optionally, R1 is at least one of tetramethylammonium hydroxide, tetraethylammonium hydroxide, tetrapropylammonium hydroxide, and choline;
R2 is at least one of tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutyl ammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

Optionally, R1 is at least one of quaternary ammonium compounds; and R2 is at least one of nitrogen-containing heterocyclic compounds and derivatives thereof.

Optionally, R1 is at least one of tetramethylammonium hydroxide, tetraethylammonium hydroxide, tetrapropylammonium hydroxide and choline;
R2 is at least one of nitrogen-containing heterocyclic compounds and derivatives thereof.

Optionally, R2 is at least one of pyridine, N-methylpyridine, N-ethylpyridine, N-propylpyridine, N-butylpyridine, N-ethyl-3-butylpyridine, l-ethyl-2-propylpyridine hydroxide, piperidine, N,N-dimethylpiperidine, N,N-dimethyl-3,5-diethylpiperidine hydroxide, N,N-dimethyl-3,5-dipropylpiperidine hydroxide, N,N-diethyl-3,5-dipropylpiperidine hydroxide, N,N-diethyl-2,6-dimethylpiperidine hydroxide, N,N-dimethyl-2,6-diethylpiperidine hydroxide, imidazole, l-ethyl-3-butylimidazole hydroxide, 1-ethyl-3-butyl-4-propylimidazole hydroxide, 1-benzyl-3-methylimidazole hydroxide, 1-benzyl-3-ethylimidazole hydroxide, 1-benzyl-3-butylimidazole hydroxide, piperazine, N-methylpiperazine, 1,4-dipropylpiperazine, l-methyl-4-ethylpiperazine, and 1-ethyl-4-butyl-5-methylpiperazine.
Optionally, the high-silica Y molecular sieve having FAU topology is an octahedral structure.

Optionally, the particle size of the high-silica Y molecular sieve having FAU topology ranges from 50 nm to 2500 nm.

According to another aspect of the present application, there is provided a catalyst. The high-silica Y molecular sieve having FAU topology prepared according to the method described in the present application can be used as a fluidized catalytic cracking catalyst and, support and catalyst for dual-functional catalysis reaction such as hydrocracking, hydrogenation desulfurization and so on.

In the present application, dynamic crystallization means that the slurry in the crystallization reactor is in a non-stationary state, and static crystallization means that the slurry in the crystallization reactor is in a stationary state.

In the context of the present application, the term "silica-alumina ratio" refers to the molar ratio of silicon to aluminum in terms of Si0₂ and Al₂O₃ in the molecular sieve, which has the same meaning as "2x/y" and "silicon-aluminum oxide ratio".

In the present application, C₁∼C₁₂, C₇~C₁₂ and the like all refer to the number of carbon atoms contained in the group. For example, "C₁~C₁₂ alkyl" refers to an alkyl having 1-12 carbon atoms.
In the present application, "alkyl" is a group formed by the loss of any hydrogen atom on the molecule of an alkane compound. The alkane compound includes straight chain alkanes, branched chain alkanes, cycloalkanes, and branched cycloalkanes.

In the present application, "alkoxy" is a group formed by the loss of hydrogen atom on -OH group of the molecule of an alkyl alcohol compound. For example, the methoxy -OCH₃ is formed by the loss of the hydrogen atom on the -OH group of the CH₃0H molecule.

In the present application, "hydroxyalkyl" is a group formed by the loss of any one hydrogen atom on non -OH group of the molecule of an alkyl alcohol compound. For example, the hydroxymethyl HOCH₂- is formed by the loss of the hydrogen atom on the methyl of the CH₃0H molecule.

In the present application, "aryl" is a group formed by the loss of one hydrogen atom in the aromatic ring of an aromatic compound. For example, p-methylphenyl is formed by the loss of the hydrogen atom on para position of methyl on the benzene ring.

In the present application, "alkylphenyl" refers to a group formed by the loss of a hydrogen atom on a benzene ring containing substituent. For example, p-methylphenyl is formed by the loss of the hydrogen atom on para position of methyl on the benzene ring.

In the present application, "phenylalkyl" refers to a group formed by the loss of one hydrogen atom of the alkyl substituent on the benzene ring. For example, the benzyl group (benzyl) is formed by the loss of one hydrogen atom of the methyl on toluene.

### BRIEF DESCRIPTION OF DRAWINGS

Figure 1 is X-ray diffraction (XRD) spectrum of sample X#1.
Figure 2 is scanning electron microscope (SEM) image of sample X#1.
Figure 3 is silicon nuclear magnetic (²⁹Si-NMR) spectrum of sample X#1.
Figure 4 is X-ray diffraction (XRD) spectrum of sample V#1.
Figure 5 is X-ray diffraction (XRD) spectrum of sample X1.
Figure 6 is scanning electron microscope (SEM) image of sample X1.
Figure 7 is silicon nuclear magnetic (²⁹Si-NMR) spectrum of sample X1.
Figure 8 is X-ray diffraction (XRD) spectrum of the comparative sample VI.
Figure 9 is X-ray diffraction (XRD) spectrum of sample Y#1.
Figure 10 is scanning electron microscope (SEM) image of sample Y#1.
Figure 11 is silicon nuclear magnetic (²⁹Si-NMR) spectrum of sample Y#1.
Figure 12 is X-ray diffraction (XRD) spectrum of sample S1.
Figure 13 is X-ray diffraction (XRD) spectrum of sample T1.
Figure 14 is an X-ray diffraction (XRD) spectrum of sample Y1.
Figure 15 is scanning electron microscope (SEM) image of sample Y1.
Figure 16 is silicon nuclear magnetic (²⁹Si-NMR) spectrum of sample Y1.
Figure 17 is X-ray diffraction (XRD) spectrum of the comparative sample S 1.
Figure 18 is X-ray diffraction (XRD) spectrum of the comparative sample T1.

### DETAILED DESCRIPTION

The present application will be described in detail below with reference to the examples, but the present application is not limited to these examples.

The analysis methods in the examples of the present application are as follows.

The X-ray powder diffraction phase analysis (XRD) of the product adopts the X'Pert PRO X-ray diffractometer from PANalytical, the Netherlands, Cu target, Ka radiation source (λ=0.15418 nm), voltage 40 KV, current 40 mA.

The instrument used in the scanning electron microscope (SEM) test is Hitachi SU8020 field emission scanning electron microscope, and the accelerating voltage is 2kV.

The elemental constitution was measured by Philips Magix 2424 X-ray fluorescence analyzer (XRF).

The silicon nuclear magnetic (²⁹Si-NMR) experiment was carried out on a Bruker Avance III 600 (14.1 Tesla) spectrometer using a 7 mm double resonance probe with a rotation speed of 6 kHz. Using high-power proton decoupling program, sampling times are 1024, π/4 pulse width is 2.5 µs, sampling delay is 10 s, and 4,4-dimethyl-4-propanesulfonate (DSS) is used as chemical shift reference which is calibrated to be 0 ppm.

The carbon nuclear magnetic (¹³C MAS NMR) experiment was carried out on a Bruker Avance III 600 (14.1 Tesla) spectrometer using a 4 mm triple resonance probe with a rotation speed of 12 kHz, wherein amantadine was used as the chemical shift reference which was calibrated to be 0 ppm.

### Example 1: Preparation of sample X#1

Preparation of synthetic gel: 0.7g sodium aluminate (Al₂O₃: 48.3wt%, Na₂0: 36.3wt%, China National Pharmaceutical (Group) Shanghai Chemical Reagent Company), 0.20g sodium hydroxide, 13.0g tetrapropylammonium hydroxide (25wt%) were dissolved in 2.40g deionized water and stirred until to be clear. 13.3g silica sol (SiO2: 30wt%, Shenyang Chemical Co., Ltd.) was added therein dropwise and stirred for 0.5 hour. Then 0.4g Y zeolite as seed crystal with silica-alumina ratio of 3 was added therein, and stirring was continued for 2 hours.

Synthesis of high-silica Y zeolite: The synthetic gel was transferred into a stainless-steel reactor, and was subject to rotational crystallization at 130 °C for 5 days. After the crystallization was completed, the obtained solid was separated from liquid, washed to be neutrality, then dried at 100 °C for 12 hours. The obtained sample was denoted as sample X#1.

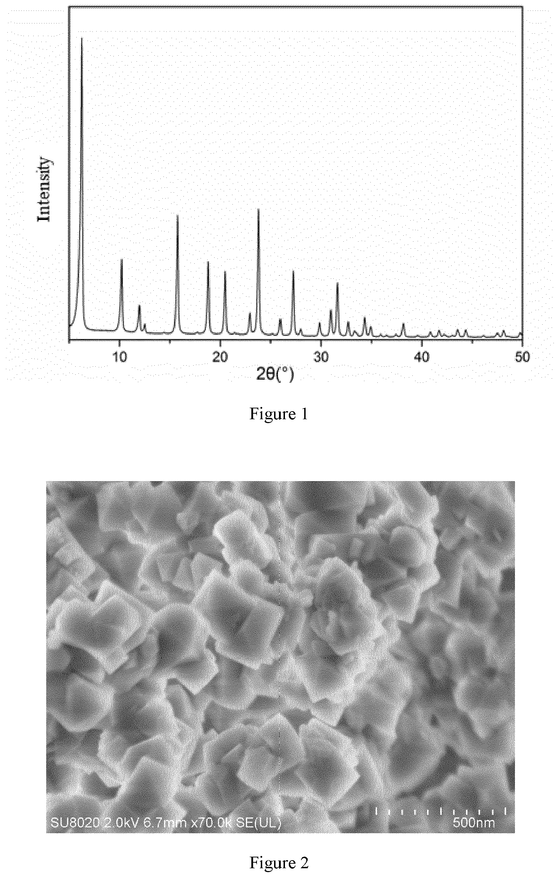

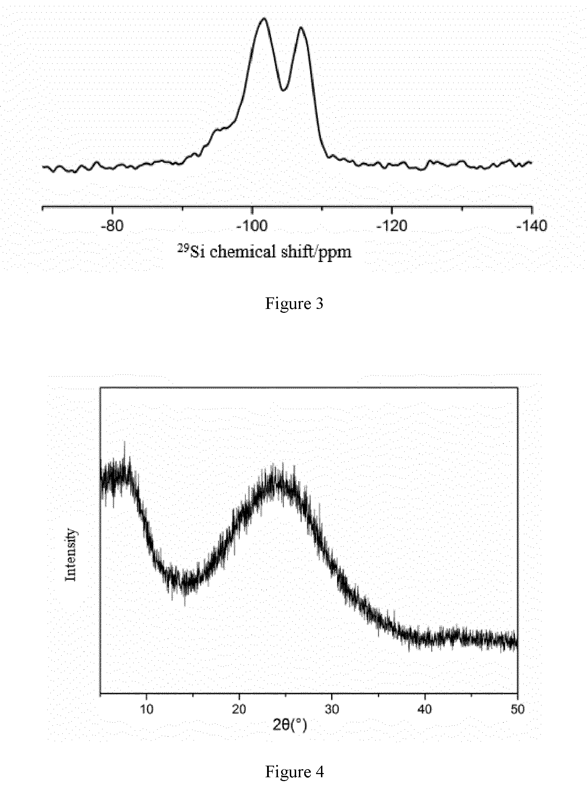

X-ray diffraction (XRD) spectrum of sample X#1 is shown in Figure 1, demonstrating that the sample X#1 is molecular sieve having FAU framework structure. Scanning electron microscope (SEM) image thereof is shown in Figure 2, demonstrating that the particles of sample X#1 are small pieces with a size ranging from 50 nm to 200 nm. ²⁹Si MAS NMR spectrum thereof is shown in Figure 3. The fitting calculation shows that the silica-alumina ratio in the framework is consistent with the calculation results conducted by XRF. According to the XRF and ¹³C MAS NMR normalization analysis, the element constitution of sample X#1 is 0.07Na·0.07R2¹·(Si_{0.86}Al_{0.14})O₂, where R2¹ is tetrapropylammonium hydroxide.

### Example 2 Preparation of samples X#2-X#30

The preparation process of any one of samples X#2-X#30 is the same as that of Example 1.The raw materials for preparing samples X#2-X#30, molar ratio thereof, addition amount of seed crystal (weight ratio of seed crystal to Si0₂ in gel), crystallization conditions, crystal structure, silica-alumina ratio (the silica-alumina ratio of the obtained product is measured by X-ray fluorescence analyzer (XRF)) and the product constitution are shown in Table 1.

Samples X#1-X#20 were prepared using silica-alumina molecular sieves having FAU topology as seed crystals, of which silica-alumina ratios were 3, 2.8, 3, 3.5, 45, 6, 6, 6, 6, 7, 70, 10, 4, 5, 6, 8, 3.5, 35, 12, 20 respectively, and which were purchased from Zibo Runxin Chemical Technology Co., Ltd. Samples X#21-X#30 were prepared using silica-alumina molecular sieves having EMT topology as seed crystals, of which silica-alumina ratios were 10, 8, 8.5, 7, 7, 8, 21, 7, 8, 22 respectively, and which were purchased from Henan Huanyu Molecular Sieve Co., Ltd.

### Comparative Example 1 Preparation of comparative samples V#1-V#30

The specific types of raw materials for preparing synthetic gel, molar ratio thereof, preparation process and crystallization conditions are the same as those of sample X#1 in Example 1, except that the seed crystal addition step is omitted. The specific types of raw materials, molar ratio thereof, crystallization conditions, and crystal structure of the product are shown in Table 2. The obtained samples are denoted as comparative samples V#1-V#30.

### Example 3 Characterization and analysis of samples X#1-X#30 and comparative samples V#1

The phases of samples X#1-X#30 and comparative samples V#1-V#30 were analyzed by X-ray diffraction method.

The results show that each of the samples X#1-X#30 prepared in Examples 1 and 2 is Y molecular sieve with both high purity and high crystallinity. The XRD spectrum of sample X#1 as typical representative is shown in Figure 1, SEM image thereof is shown in Figure 2, and Si NMR thereof is shown in Figure 3. The XRD spectrum result of any one of samples X#2-X#30 is close to Figure 1. In other words, the diffraction peak positions and shapes are substantially identical. The relative peak intensity fluctuates within ±5% depending on the change of synthesis conditions, demonstrating that any of samples X#1-X#30 has the structural characteristics of Y zeolite and has no impurities. The silica-alumina ratio of any sample is much higher than that of conventional Y zeolite. The introduction of organic templating agent is the key to the synthesis of high-silica Y zeolite.

Each of V#I-V#30 as products in Table 2 is amorphous, and the XRD spectrum of the comparative sample V#1 as typical representative is shown in Figure 4. It can be seen that during the synthesis of high-silica Y zeolite, in addition to the organic templating agent, the introduction of seed crystal is also necessary.

**Table 1 Types of raw materials, molar ratio thereof, addition amount of seed crystal, crystallization conditions, crystal structure, silica-alumina ratio and product constitution of samples X#1-X#30**

| Sample | Initial gel constitution | Addition amount of seed crystal | Crystallization temperature | Crystallization time | Crystal structure | Silica-alumina ratio | Product constitution |
|---|---|---|---|---|---|---|---|
| X#1 | 20SiO₂¹:1Al₂O₃³:2.0 Na₂O:4.8R2¹:360H₂O | 1% | 130 °C | Dynamic 5 days | FAU | 12 | 0.07Na 0.07R2¹ (Si_{O}.₈₆AIₒ.₁₄)0₂ |
| X#2 | 15S102': IA1₂0₃': 1 .8 Na₂O:3.6R2¹:200H₂O | 3% | 130 °C | Static 4 days | FAU | 9 | 0.09Na0.09R2¹ (Si_{O}.₈₂AIₒ.₁₈)0₂ |
| X#3 | 20SiO₂¹:1Al₂O₃²:1.8 Na₂O:5.2R2¹:400H₂O | 12% | 110 °C | Dynamic 6 days | FAU | 11 | 0.07Na 0.08R2¹ (Si_{O}.₈₅AIₒ.₁₅)0₂ |
| X#4 | S0SiO^1AbO^S.0 Na₂O:13R2²:800H₂O | 8% | 140 °C | Dynamic 8 days | FAU | 15 | 0.03Na 0.07R2² (Sio.₈₈Alo.ₗ₂)0₂ |
| X#5 | 20SiO₂² :1Al₂O₃²:3.0 Na₂O:5R2²:400H_{z}O | 15% | 120 °C | Static 6 days | FAU | 8 | 0.08Na 0.12R2² (Si_{0.8}Al_{0.2})O₂ |
| X#6 | 20Si0₂² :1Al₂O₃¹ :3N a₂O:4.5R2³:400H₂O | 10% | 130 °C | Static 3 days | FAU | 11 | 0.07Na 0.08R2³ (Si₀.₈₅Al₀.₁₅)0₂ |
| X#7 | 200SiO₂² : 1Al₂O₃² :2 5Na₂0:45R2³:3000H₂ O | 12% | 120 °C | Dynamic 8 days | FAU | 28 | 0.02Na 0.05R2³ (Si_{0.93}Al_{0.07})O₂ |
| X#8 | S0SiOz² : IA1₂0₃² :7N a₂O:11R2³:800H₂O | 8% | 140 °C | Dynamic 6 days | FAU | 18 | 0.03Na 0.07R2³ (Siₒ.₉ₒAlₒ.ₗₒ)O₂ |
| X#9 | 60SiO₂²:1Al₂O₃²: 8.0Na₂0: 15R2³:900H ₂0 | 9% | 140 °C | Dynamic 2 days | FAU | 20 | 0.03Na 0.06R2³ (Si₀.₉ₗAl₀.₀₉)O₂ |
| X#10 | 100SiO₂² :1Al₂O₃² :2 0Cs₂O:10R2⁴:800H₂O | 5% | 180 °C | Dynamic 0.2day | FAU | 35 | O.OlCs 0.02R2⁴ (Si_{O}.₉₇AIₒ.₃)0₂ |
| X#11 | 30Si0₂² :lAh0₃³ :4.0 Na_{z}O:7R2⁴:500H_{z}O | 14% | 120 °C | Static 3 days | FAU | 13 | 0.07Na 0.06R2⁴ (Si_{O}.₈₇AI₀.1₃)O₂ |
| X#12 | 150SiO₂² :1Al₂O₃¹:15 K₂O:20R2⁴:1500H₂O | 16% | 160 °C | Dynamic 0.5day | FAU | 40 | 0.01K 0.01R2⁴(Si_{0.98}Al_{0.02})O₂ |
| X#13 | 30SIO₂ ²: IA1₂0₃¹ :4.0 Na₂O:7R2⁵:500H₂O | 20% | 100 °C | Static 8 days | FAU | 13 | 0.09Na 0.06R2⁵ (Siₒ.₈₄Alₒ.ₗ₆)0₂ |
| X#14 | 100SiO₂²:1Al₂O₃¹ :12 Na₂O:25R2':2000H₂ O | 16% | 120 °C | Dynamic 5 days | FAU | 20 | 0.04Na 0.05R2⁵ (Si_{0.91}Al_{0.09})O₂ |
| X#15 | 150SiO₂¹: 1AlzO₃²:15 Na₂O:35R2⁵:2800H_{2 0} | 17% | 120 °C | Dynamic 5 days | FAU | 25 | 0.03Na 0.04R2⁵ (Si_{0.93}Al_{0.07})O₂ |
| X#16 | 8OS₁0₂ ¹: 1 A1₂ 0₃²:ION a₂O:18R2⁵:1500H₂O | 10% | 110 °C | Dynamic 5 days | FAU | 18 | 0.04Na 0.06R2⁵ (Siₒ.₉ₒAlₒ.ₗₒ)O₂ |
| X#17 | 100SiO₂¹:1Al₂O₃³:12 Na₂O:23R2⁶:1800H₂ O | 9% | 115 °C | Dynamic 5 days | FAU | 20 | 0.03Na 0.06R2⁶ (Si_{0.91}Al_{0.09})O₂ |
| X#18 | 60SiO₂¹:1Al₂O₃³:7Na ₂O:15R2⁶:1100H₂O | 7% | 130 °C | Dynamic 3 days | FAU | 15 | 0.06Na 0.06R2⁶ (Siₒ.₈₈AIₒ.₁₂)0₂ |
| X#19 | 45SiO₂¹:1Al₂O₃³:4Na ₂O:9R2⁶:800H₂O | 13% | 120 °C | Static 8 days | FAU | 14 | 0.06Na 0.06R2⁶ (Si_{O}.₈₈AI₀.1₂)O₂ |
| X#20 | 10S10₂ ³: IA1₂0₃²:0.1 Na₂O:5R2⁷:150H₂O | 16% | 90 °C | Static 15 days | FAU | 7 | 0.13Na 0.09R2⁷ (Siₒ.₇₈Alₒ.₂₂)0₂ |
| X#21 | 15SiO₂³:1Al₂O₃⁵:1.8 Na₂O: 5R2⁷: 200H₂O | 10% | 140 °C | Static 5 days | FAU | 8 | 0.11Na 0.09R2⁷ (Si_{0.80}Al_{0.20})O₂ |
| X#22 | 20SiO₂³:1Al₂O₃⁵:1.8 Na₂0:4.8R2⁸: 400H₂O | 12% | 110 °C | Static 5 days | FAU | 12 | 0.09Na 0.05R2⁸ (Siₒ.₈₆Alₒ.ₗ₄)0₂ |
| X#23 | 50SiO₂³:1Al₂O₃⁵:5Na ₂O:12R2':800H₂O | 12% | 120 °C | Dynamic 3 days | FAU | 20 | 0.03Na 0.06R2⁸ (Si_{0.91}Al_{0.09})O₂ |
| X#24 | 20SiO₂³:1Al₂O₃⁶:4.0 Na₂O: 4R2⁹: 400H₂O | 15% | 140 °C | Dynamic 5 days | FAU | 12 | 0.08Na 0.06R2⁹ (Si₀.₈₆Al₀.₁₄)O₂ |
| X#25 | 15 SiOz⁴: 1Al₂O₃⁶:3.0 Na₂O:4R2⁹:280H₂O | 10% | 110 °C | Dynamic 4 days | FAU | 10 | 0.09Na 0.08R2⁹ (Si₀.₈₃Al₀.ᵢ₇)O₂ |
| X#26 | 100SiO₂⁴:1A1₂O₃⁶:10 Na_{z}O:18R2¹°:2000H_{z} O | 12% | 120 °C | Dynamic 5 days | FAU | 20 | 0.04Na 0.05R2'" (Si_{0.91}Al_{0.09})O₂ |
| X#27 | 150SIO₂ ⁴: IA1₂0₃⁷:15 Na₂0:3OR2'⁰:290OH₂ O | 11% | 120 °C | Dynamic 8 days | FAU | 30 | 0.02Na 0.04R2¹⁰ (Si₀.₉₄Al₀.₀₆)O₂ |
| X#28 | 80SiO₂⁴:1Al₂O₃⁷:10N a₂O:15R2'¹:1500H₂O | 10% | 120 °C | Dynamic 4 days | FAU | 16 | 0.04Na 0.07R2¹¹ (Siₒ.ggAlₒ.₁₁)0₂ |
| X#29 | 40S_{I}O₂ ⁴: IA1₂0₃⁷:5Na ₂O:10R2¹¹:1500H₂O | 9% | 120 °C | Dynamic 5 days | FAU | 12 | 0.06Na 0.08R2¹¹ (Si_{0.86}Al_{0.14})O₂ |
| X#30 | 150SiO₂⁴:1Al₂O₃⁷:14 Na₂O:25R2¹¹:2500H₂ O | 10% | 120 °C | Dynamic 3 days | FAU | 25 | 0.02Na 0.05R2¹¹ (Si_{0.93}Al_{0.07})O₂ |

| | | | | | | | |
|---|---|---|---|---|---|---|---|
| Note: Al₂O₃¹: Alumina; SiO₂¹: Silica sol; R2¹: Tetrapropylammonium hydroxide Al₂O₃²: Aluminum isopropoxide; SiO₂2: Ethyl orthosilicate; R2²: Triethylhexylammonium hydroxide Al₂O₃³: Sodium aluminate; SiO₂³: Fumed silica; R2³: Triethylbenzylammonium hydroxide Al₂O₃⁴:Aluminum nitrate; SiO₂⁴: Silica gel R2⁴:N,N,N-tripropyl adamantylammonium hydroxide Al₂O₃⁵: Aluminum 2-butoxide; R2⁵: Dipropyldibutylammonium hydroxide Al₂O₃⁶: Aluminum sulfate; R2⁶: Benzyltripropylammonium hydroxide Al₂O₃⁷: Aluminum powder; R2⁷: Choline R2⁸: Tetrabutylammonium hydroxide R2⁹: Tetrahexylammonium hydroxide R2¹⁰: Tributyl-hydroxyethyl ammonium hydroxide R2¹¹: Tripropyl-hydroxyethylammonium hydroxide | | | | | | | |

**Table 2 Types of raw materials, molar ratio thereof, crystallization conditions, and crystal structure of samples V#1-V#30**

| Sample | Initial gel constitution | Crystallization temperature | Crystallization manner and time | Crystal structure |
|---|---|---|---|---|
| V#1 | 20SiO₂¹:1Al₂O₃³:2.0Na₂O:4.8R2¹:360H₂O | 130 °C | Dynamic 5 days | Amorphous |
| V#2 | 15SiO₂¹:1Al₂O₃³:18Na₂O:3.6R2¹:200H₂O | 130 °C | Static 4 days | Amorphous |
| V#3 | 20SiO₂¹:1Al₁O₃²:1.8Na₂O:5.2R2¹:400H₂O | 110 °C | Dynamic 6 days | Amorphous |
| V#4 | 50SiO₂¹:1Al₂O₃¹:8.0Na₂O:13R2²:800H₂O | 140 °C | Dynamic 8 days | Amorphous |
| V#5 | 20SiO₂² :1Al₂O₃²:3.0Na₂O:5R2²:400H₂O | 120 °C | Static 6 days | Amorphous |
| V#6 | 20SiO₂² :1Al₂O₃¹:3Na₂O:4.5R2³:400H₂O | 130 °C | Static 3 days | Amorphous |
| V#7 | 200SiO₂² :1Al₂O₃²:25Na₂O:45R2³:3000H₂O | 120 °C | Dynamic 8 days | Amorphous |
| V#8 | 50SiO₂² :1Al₂O₃² :7Na₂O:11R2³:800H₂O | 140 °C | Dynamic 6 days | Amorphous |
| V#9 | 60SiO₂²:1AL₂O₃²: 8.0Na₂O:15R2³:900H₂O | 140 °C | Dynamic 2 days | Amorphous |
| V#10 | 100SiO₂² :1Al₂O₃² :20Cs₂O:10R2⁴:800H₂O | 180 | Dynamic 0.2day | Amorphous |
| V#11 | 30SiO₂² :1Al₂O₃³ :4.0Na₂O:7R2⁴:500H₂O | 120 °C | Static 3 days | Amorphous |
| V#12 | 150SiO₂²:1Al₂O₃¹:15K₂O:20R2⁴:1500H₂O | 160 °C | Dynamic 0.5day | Amorphous |
| V#13 | 30SiO₂²:1Al₂O₃¹ :4.0Na₂O:7R2⁵:500H₂O | 100 °C | Static 8 days | Amorphous |
| V#14 | 100SiO₂²:1Al₂O₃¹ :12Na₂O:25R2⁵:2000H₂O | 120 °C | Dynamic 5 days | Amorphous |
| V#15 | 150SiO₂¹:1Al₂O₃²:15Na₂O:35R2⁵:2800H₂O | 120 °C | Dynamic 5 days | Amorphous |
| V#16 | 80SiO₂¹:1Al₂O₃²:10Na₂O:18R2⁵:1500H₂O | 110 °C | Dynamic 5 days | Amorphous |
| V#17 | 100SiO₂¹:1Al₂O₃³:12Na₂O:23R2⁶:1800H₂O | 115 °C | Dynamic 5 days | Amorphous |
| V#18 | 60SiO₂¹:1Al₂O₃³:7Na₂O:15R2⁶:1100H₂O | 130 °C | Dynamic 3 days | Amorphous |
| V#19 | 45SiO2¹:1Al₂O₃³:4Na₂O:9R2⁶:800H₂O | 120 °C | Static 8 days | Amorphous |
| V#20 | 10SiO₂³:1Al₂O₃²:0.1Na₂O:5R2⁷:150H₂O | 90 °C | Static 15 days | Amorphous |
| V#21 | 15SiO₂³:1Al₂O₃⁵:1.8Na₂O: 5R2⁷: 200H₂O | 140 °C | Static 5 days | Amorphous |
| V#22 | 20SiO₂³:1Al₂O₃⁵:1.8Na₂O: 4.8R2⁸: 400H₂O | 110 °C | Static 5 days | Amorphous |
| V#23 | 50SiO₂³:1Al₂O₃⁵:5Na₂O: 12R2⁸: 800H₂O | 120 °C | Dynamic 3 days | Amorphous |
| V#24 | 20SiO₂³:1Al₂O₃⁶:4.0Na₂O: 4R2⁹: 400H₂O | 140 °C | Dynamic 5 days | Amorphous |
| V#25 | 15SiO₂⁴:1Al₂O₃⁶ :3.0Na₂O:4R2⁹:280H₂O | 110 °C | Dynamic 4 days | Amorphous |
| V#26 | 100SiO₂⁴:1Al₂O₃⁶ :10Na₂O:18R2¹⁰:2000H₂O | 120 °C | Dynamic 5 days | Amorphous |
| V#27 | 150SiO₂⁴:1Al₂O₃⁷ :15Na₂O:30R2¹⁰:2800H₂O | 120 °C | Dynamic 8 days | Amorphous |
| V#28 | 80SiO₂⁴:1Al₂O₃⁷ :10Na₂O:15R2¹¹:1500H₂O | 120 °C | Dynamic 4 days | Amorphous |
| V#29 | 40SiO₂⁴:1Al₂O₃⁷:5Na₂O:10R2¹¹:1500H₂O | 120 °C | Dynamic 5 days | Amorphous |
| V#30 | 150SiO₂⁴:1Al₂O₃⁷ :14Na₂O:25R2¹¹:2500H₂O | 120 °C | Dynamic 3 days | Amorphous |

| | | | | |
|---|---|---|---|---|
| Note: Al₂O₃¹: Alumina; SiO₂¹: Silica sol; R2¹: Tetrapropylammonium hydroxide Al₂O₃²: Aluminum isopropoxide; SiO₂2: Ethyl orthosilicate; R2²: Triethylhexylammonium hydroxide Al₂O₃³: Sodium aluminate; SiO₂³: Fumed silica; R2³: Triethylbenzylammonium hydroxide Al₂O₃⁴: Aluminum nitrate; SiO₂⁴: Silica gel R2⁴: N,N,N-tripropyl adamantylammonium hydroxide Al₂O₃⁵: Aluminum 2-butoxide; R2⁵: Dipropyldibutylammonium hydroxide Al₂O₃⁶: Aluminum sulfate; R2⁶: Benzyltripropylammonium hydroxide Al₂O₃⁷: Aluminum powder; R2⁷: Choline R2⁸ : Tetrabutylammonium hydroxide R2⁹ : Tetrahexylammonium hydroxide R2¹⁰: Tributyl-hydroxyethyl ammonium hydroxide R2¹¹ : Tripropyl-hydroxyethylammonium hydroxide | | | | |

### Example 4 Preparation of sample X1

Preparation of synthetic gel: 0.7g sodium aluminate (Al₂O₃: 48.3wt%, Na₂0: 36.3wt%, China National Pharmaceutical (Group) Shanghai Chemical Reagent Company), 0.20g sodium hydroxide, 13.74 g N,N-dimethyl-3,5-dipropylpiperidine hydroxide (25wt%) were dissolved in 1.82g deionized water and stirred until to be clear. 13.3g silica sol (SiO₂: 30wt%, Shenyang Chemical Co., Ltd.) was added therein dropwise and stirred for 2 hours. Then 0.4g Y zeolite as seed crystal with silica-alumina ratio of 3 was added therein, and stirring was continued for 2 hours.

Synthesis of high-silica Y zeolite: The synthetic gel was transferred into a stainless-steel reactor, and was subject to rotational crystallization at 130 °C for 5 days. After the crystallization was completed, the obtained solid was separated from liquid, washed to be neutrality, then dried at 100 °C for 12 hours. The obtained sample was denoted as sample X1.

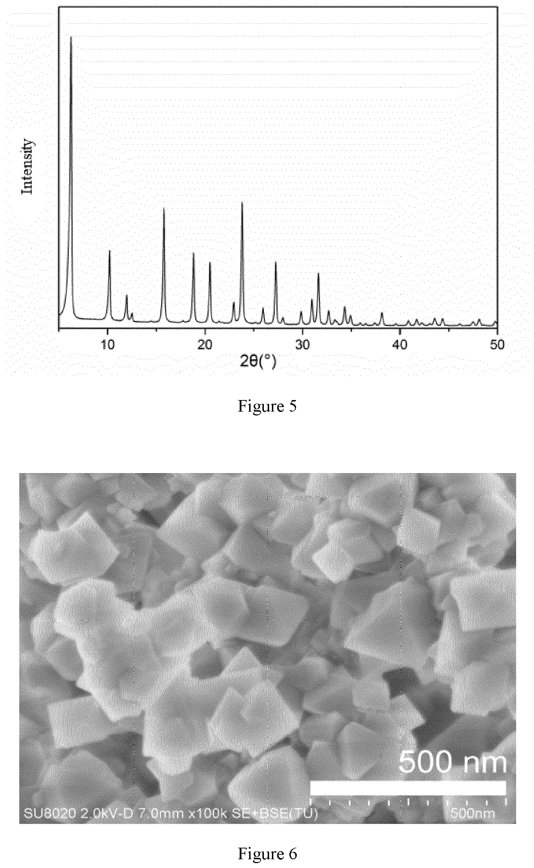

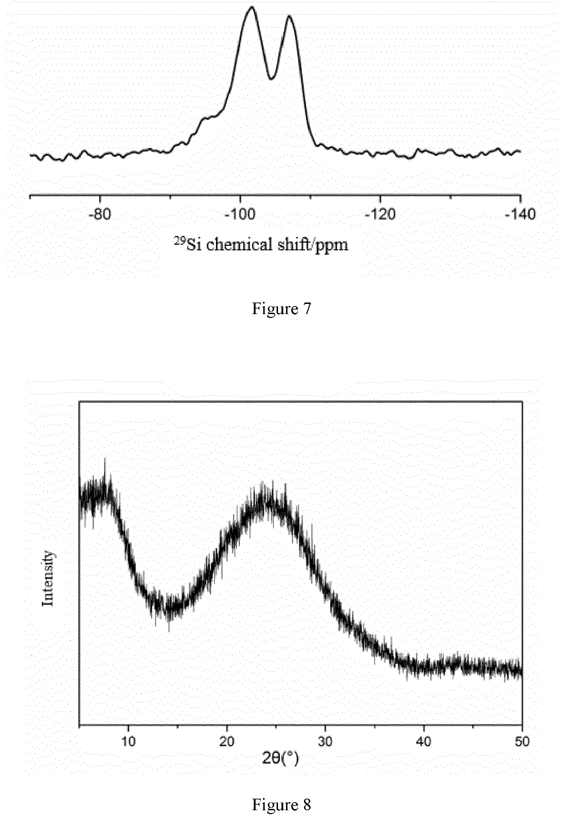

X-ray diffraction (XRD) spectrum of sample X1 is shown in Figure 5, demonstrating that the sample X1 is molecular sieve having FAU framework structure. Scanning electron microscope (SEM) image thereof is shown in Figure 6, demonstrating that the particles of sample X1 are small pieces with a size ranging from 50 nm to 200 nm. ²⁹Si MAS NMR spectrum thereof is shown in Figure 7. The fitting calculation shows that the silica-alumina ratio in the framework is consistent with the calculation results conducted by XRF. According to the XRF and ¹³C MAS NMR normalization analysis, the element constitution of sample X1 is 0.07Na·0.07R¹·(Si_{0.86}Al_{0.14})O₂, where R¹ is N,N-dimethyl-3,5-dipropylpiperidine hydroxide.

### Example 5: Preparation of samples X2-X30

The preparation process of any one of samples X2-X30 is the same as that of Example 4. The raw materials for preparing samples X2-X30, molar ratio thereof, addition amount of seed crystal (weight ratio of seed crystal to Si0₂ in gel), crystallization conditions, crystal structure, silica-alumina ratio (the silica-alumina ratio of the obtained product is measured by X-ray fluorescence analyzer (XRF)) and the product constitution are shown in Table 3.

Samples X1-X20 were prepared using silica-alumina molecular sieves having FAU topology as seed crystals, of which silica-alumina ratios were 3, 2.8, 3.5, 40, 5, 6, 6, 6, 6, 7, 92, 10, 3.5, 4, 6, 8, 4, 35, 12, 20 respectively, and which were purchased from Zibo Runxin Chemical Technology Co., Ltd. Samples X21-X30 were prepared using silica-alumina molecular sieves having EMT topology as seed crystals, of which silica-alumina ratios were 7, 7, 8.5, 7, 8, 10, 21, 32, 8 and 7 respectively, and which were purchased from Henan Purchased by Huanyu Molecular Sieve Co., Ltd.

### Comparative Example 2: Preparation of comparative samples V1-V30

The preparation process of any one of samples V1-V30 is the same as that of Example 4, except that there is no seed crystal addition step. Types of raw materials, molar ratio thereof, crystallization conditions, and crystal structure of samples V1-V30 are shown in Table 2. The samples obtained are denoted as comparative samples V1-V30.

### Example 6: Characterization and analysis of samples X1-X30 and comparative

### samples V1-V30

The phases of samples X1-X30 and comparative samples V1-V30 were analyzed by X-ray diffraction method.

The results show that each of the samples X1-X30 prepared in Examples 4 and 5 is Y molecular sieve with both high purity and high crystallinity. The XRD spectrum of sample X1 as typical representative is shown in Figure 5, SEM image thereof is shown in Figure 6, and Si NMR thereof is shown in Figure 7. The XRD spectrum result of any one of samples X2-X30 is close to Figure 1. In other words, the diffraction peak positions and shapes are substantially identical. The relative peak intensity fluctuates within ±5% depending on the change of synthesis conditions, demonstrating that any of samples X1-X30 has the structural characteristics of Y zeolite and has no impurities. The silica-alumina ratio of any sample is much higher than that of conventional Y zeolite. It can be seen that during the synthesis of the high-silica Y molecular sieve according to the present application, the introduction of nitrogen-containing heterocyclic templating agent is the key to the synthesis of the high-silica Y molecular sieve according to the present application.

In Table 4, each of the comparative samples V1-V30 is amorphous, and a XRD spectrum of the comparative sample V1 as typical representative is shown in Figure 4. It can be seen that during the synthesis of high-silica Y zeolite, in addition to the introduction of nitrogen-containing heterocyclic templating agent, the introduction of seed crystal is also necessary.

**Table 3 Types of raw materials, molar ratio thereof, addition amount of seed crystal, crystallization conditions, and crystal structure, silica- alumina ratio, and constitution of samples X1-X30**

| Sample | Initial gel constitution | Addition amount of seed crystal | Crystallization temperature | Crystallization time | Crystal structure | silica-alumina ratio | constitution |
|---|---|---|---|---|---|---|---|
| X1 | 20SiO₂¹:1Al₂O₃³:2.0Na₂O:4. 8R¹:360H₂O | 10% | 130 °C | Dynamic 5 days | FAU | 12 | 0.07Na·0.07R¹(Si_{0.86}Al _{0.14})O₂ |
| X2 | 15SiO₂¹:1Al₂O₃³:1.8Na₂O:3. 6R¹:200H₂O | 10% | 130 °C | Static days | 4 FAU | 9 | 0.09Na·0.09R¹(Si_{0.82}Al _{0.18})O₂ |
| X3 | 20SiO₂¹:1Al₂O₃²:1.8Na₂O:5. 2R¹:400H₂O | 12% | 110 °C | Dynamic days | 6 FAU | 11 | 0.07K·0.08R¹(Si_{0.85}Al₀. ₁₅)O₂ |
| X4 | 50SiO₂¹:1Al₂O3¹:8.0Na₂O:1 3R²:800H₂O | 8% | 140 °C 140 °C | Dynamic days | 8 FAU | 15 | 0.03Na·0.07R²(Si_{0.88}Al _{0.12})O₂ |
| X5 | 20SiO₂² :1Al₂O₃²:3.0Na₂O:5 15% R²:400H₂O | 120 °C | Static days | 6 FAU | 8 | 0.08Na·0.12R²(Si_{0.8}Al_{0 .2})O₂ | |
| X6 | 20SiO₂² :1Al₂O₃¹:3Na₂O:4.5 10% R³:400H₂O | 130 °C | Static days | 3 FAU | 11 | 0.07Na·0.08R³(Si_{0.85}Al _{0.15})O₂ | |
| X7 | 200SiO₂² :1Al₂O₃²:25Na₂O: 12% 45R2³ :6000H₂O | 120°C | Dynamic 8 days | FAU | 28 | 0.02Na·0.05R³(Si_{0.93}Al _{0.07})O₂ | |
| X8 | 50SiO₂² :1Al₂O₃² :7Na₂O:11 8% R³:800H₂O | 140°C | Dynamic 6 days | FAU | 18 | 0.03Na·0.07R³(Si_{0.90}Al _{0.10})O₂ | |
| X9 | 60SiO₂²:1Al₂O₃²: 9% 8.0Na₂O:15R³:900H₂O | 140°C | Dynamic days | 6 FAU | 20 | 0.03Na·0.06R³(Si_{0.91}Al _{0.09})O₂ | |
| X10 | 15SiO₂² 1Al₂O₃² :4R⁴:200H 5% ₂O | 120°C | Static 8 days | FAU | 9 | 0.018R⁴(Si_{0.82}Al_{0.18})O₂ | |
| X11 | 30SiO₂² 1Al₂O₃³ :4.0Na₂O: 14% 7R⁴:500H₂O | 120°C | Static 10 days | FAU | 13 | 0.07Na·0.06R⁴(Si_{0.87}Al _{0.13})O₂ | |
| X12 | 20SiO₂²:1Al₂O₃¹:2.5Na₂O:5 16% R⁴:400H₂O | 120°C | Static 12 days | FAU | 10 | 0.09Na·0.08R⁴(Si_{0.83}Al _{0.17})O₂ | |
| X13 | 30SiO₂²:1Al₂O₃¹ :4.0Na₂O:7 20% R⁵:500H₂O | 100 °C | Static 8 days | FAU | 13 | 0.09Na·0.06R⁵(Si_{0.84}Al _{0.16})O₂ | |
| X14 | 100SiO₂²:1Al₂O₃¹ :12Na₂O: 16% 25R2⁵:2000H₂O | 120°C | Dynamic 5 days | FAU | 20 | 0.04Na·0.05R⁵(Si_{0.91}Al _{0.09})O₂ | |
| X15 | 150SiO₂¹:1Al₂O₃²:15Na₂O:3 17% 5R2⁵:2800H₂O | 120 °C | Dynamic 5 days | FAU | 25 | 0.03Na·0.04R⁵(Si_{0.93}Al _{0.07})O₂ | |
| X16 | 80SiO₂¹:1Al₂O₃²:10Na₂O:18 10% R2⁵:1500H₂O | 110 °C | Dynamic 5 days | FAU | 18 | 0.04Na·0.06R⁵(Si_{0.90}Al _{0.10})O₂ | |
| X17 | 100SiO₂¹:1Al₂O₃³:12Cs₂O:2 9% 3R⁶:1800H₂O | 115°C | Dynamic 5 days | FAU | 20 | 0.03 Cs ·0.06R⁶(Si_{0.91}Al_{0.09})O₂ | |
| X18 | 60SiO₂¹:1Al₂O₃³:7Na₂O:15 7% R⁶:1100H₂O | 130°C | Dynamic 3 days | FAU | 15 | 0.06Na·0.06R⁵(Si_{0.88}Al _{0.12})O₂ | |
| X19 | 45SiO₂¹:1Al₂O₃³:4Na₂O:9R⁶ 13% :800H₂O | 120°C | Static 8 days | FAU | 14 | 0.06Na·0.06R⁶(Si_{0.88}Al _{0.12})O₂ | |
| X20 | 10SiO₂³:1Al₂O₃²:0.1Na₂O:5 16% R⁷:150H₂O | 90 °C | Static 15 days | FAU | 7 | 0.13Na·0.09R⁷(Si_{0.78}Al _{0.22})O₂ | |
| X21 | 15SiO₂³:1Al₂O₃⁵:1.8Na₂O: 10% 5R⁷: 200H₂O | 140°C | Static 5 days | FAU | 8 | 0.11Na·0.09R⁷(Si_{0.80}Al _{0.20})O₂ | |
| X22 | 20SiO₂³:1Al₂O₃⁵:1.8Na₂O: 12% 4.8R⁸: 400H₂O | 110 °C | Static 5 days | FAU | 12 | 0.09Na·0.05R⁸(Si_{0.86}Al _{0.14})O₂ | |
| X23 | 50SiO₂³:1Al₂O₃⁵:5Na₂O: 12% 12R⁸: 800H₂O | 160°C | Dynamic 1day | FAU | 20 | 0.03Na·0.06R⁸(Si_{0.91}Al _{0.09})O₂ | |
| X24 | 20SiO₂³·1Al₂O₃⁶:4.0Na₂O: 15% 4R⁹: 400H₂O | 140°C | Dynamic 3 days | FAU | 12 | 0.08Na·0.06R⁹(Si_{0.86}Al _{0.14})O₂ | |
| X25 | 15SiO₂⁴:1Al₂O₃⁶ :3.0Na₂O:4 10% R⁹:280H₂O | 110°C | Dynamic 5 days | FAU | 10 | 0.09Na·0.08R⁹(Si_{0.83}Al _{0.17})O₂ | |
| X26 | 100SiO₂⁴:1Al₂O₃⁶ :10Na₂O: 12% 18R¹⁰:2000H₂O | 120°C | Dynamic 5 days | FAU | 20 | 0.04Na·0.05R¹⁰(Si_{0.91}A l_{0.09})O₂ | |
| X27 | 150SiO₂⁴:1Al₂O₃⁷ :15Na₂O: 11% 30R¹⁰:2800H₂O | 120°C | Dynamic 8 days | FAU | 30 | 0.02Na·0.04R¹⁰(Si_{0.94}A l_{0.06})O₂ | |
| X28 | 80SiO₂⁴:1Al₂O₃⁷ :10Na₂O:1 10% 5R¹¹:1500H₂O | 120°C | Dynamic 7 days | FAU | 16 | 0.04Na·0.07R¹¹(Si_{0.89}A l_{0.11})O₂ | |
| X29 | 40SiO₂⁴:1Al₂O₃⁷ :5Na₂O:10 9% R¹¹:1500H₂O | 120°C | Dynamic 5 days | FAU | 12 | 0.06Na·0.08R¹¹(Si_{0.86}A l_{0.14})O₂ | |
| X30 | 150SiO₂⁴:1Al₂O₃⁷ :14Na₂O: 10% 25R¹¹:2500H₂O | 180 °C | Dynamic 0.5day | FAU | 25 | 0.02Na·0.05R¹¹(Si_{0.93}A l_{0.07})O₂ | |

| | | | | | | | |
|---|---|---|---|---|---|---|---|
| Note: Al₂O₃¹: Alumina; SiO₂¹: Silica sol; R¹: N,N-dimethyl-3,5 -dipropylpiperidine hydroxide Al₂O₃²: Aluminum isopropoxide; SiO₂²: Ethyl orthosilicate; R²: N,N-diethyl-2,6-dimethylpiperidine hydroxide Al₂O₃³: Sodium aluminate; SiO₂³: Fumed silica; R³: N,N-diethyl-3,5 -dipropylpiperidine hydroxide Al₂O₃⁴: Aluminum nitrate; SiO₂⁴: Silica gel R⁴: N-ethyl-3-butylpyndine Al₂O₃⁵: Aluminum tri-sec-butoxide; R⁵: N,N-diethyl-3,5-dipropylpiperidine hydroxide Al₂O₃⁶: Aluminum sulfate; R⁶: 1,4-dipropylpiperazine Al₂O₃⁷: Aluminum powder; R⁷: N-methylpyridine R⁸: N-ethyl-3-butylpyridine R⁹ : 1 -ethyl-3 -butylimidazole hydroxide R¹⁰: 1-ethyl-4-butyl-5 -methylpiperazine R¹¹ : 1-ethyl-3-butyl-4-propylimidazole hydroxide | | | | | | | |

**Table 4 Types of raw materials, molar ratio thereof, crystallization conditions, and crystal structure of samples V1-V30**

| Sample | Initial gel constitution | Crystallization temperature | Crystallization manner and time | Crystal structure |
|---|---|---|---|---|
| V1 | 20SiO₂¹:1Al₂O₃³:2.0Na₂O:4.8R¹:360 | 130°C | Dynamic 5 days | Amorphous |
| V2 | 15SiO₂¹:1Al₂O₃³:1.8Na₂O:3.6R¹:200 H₂O | 130 °C | Static 4 days | Amorphous |
| V3 | 20SiO₂¹:1Al₂O₃²:1.8K₂O:5.2R¹:400 H₂O | 110°C | Dynamic 6 days | Amorphous |
| V4 | 50SiO₂¹:1Al₂O₃¹:8.0Na₂O:13R²:800 H₂O | 140 °C | Dynamic 8 days | Amorphous |
| V5 | 20SiO₂² 1Al₂O₃²:3.0Na₂O:5R²:400 H₂O | 120 °C | Static 6 days | Amorphous |
| V6 | 20SiO₂² :1Al₂O₃¹:3Na₂O:4.5R³:400 H₂O | 130 °C | Static 3 days | Amorphous |
| V7 | 200SiO₂²:1Al₂O₃²:25Na₂O:45R³:600 0H₂O | 120°C | Dynamic 8 days | Amorphous |
| V8 | 50SiO₂² :1Al₂O₃²:7Na₂O:11R³:800H ₂O | 140 °C | Dynamic 6 days | Amorphous |
| V9 | 60SiO₂²: 1Al₂O₃²: 8.0Na₂O:15R2³:900H₂O | 140 °C | Dynamic 6 days | Amorphous |
| V10 | 15SiO₂² :1Al₂O₃² :4R⁴:200H₂O | 120 °C | Static 8 days | Amorphous |
| V11 | 30SiO₂² H₂O:1Al₂O₃³ :4.0Na₂O:7R⁴:500 H₂O | 120 °C | Static 10 days | Amorphous |
| V12 | 20SiO₂²:1Al₂O₃¹ :2.5Na₂O:5R⁴:400 H₂O | 120°C | Static 12 days | Amorphous |
| V13 | 30SiO₂²:1Al₂O₃¹ :4.0Na₂O:7R⁵:500 H₂O | 100 °C | Static 8 days | Amorphous |
| V14 | 100SiO₂²:1Al₂O₃¹:12Na₂O:25R⁵:200 0H₂O | 120°C | Dynamic 5 days | Amorphous |
| V15 | 150SiO₂¹:1Al₂O₃²:15Na₂O:35R⁵:280 0H₂O | 120°C | Dynamic 5 days | Amorphous |
| V16 | 80SiO₂¹:1Al₂O₃²:10Na₂O:18R⁵:1500 H₂O | 110 °C | Dynamic 5 days | Amorphous |
| V17 | 100SiO₂¹:1Al₂O₃³:12Cs₂O:23R⁶:180 0H₂O | 115 °C | Dynamic 5 days | Amorphous |
| V18 | 60SiO₂¹:1Al₂O₃³:7Na₂O:15R⁶:1100 H₂O | 130 °C | Dynamic 3 days | Amorphous |
| V19 | 45SiO₂¹:1Al₂O₃³:4Na₂O:9R⁶:800H₂O | 120°C | Static 8 days | Amorphous |
| V20 | 10SiO₂³:1Al₂O₃²:0.1Na₂O:1.5R⁷:150 H₂O | 90 °C | Static 15 days | Amorphous |
| V21 | 15SiO₂³:1Al₂O₃⁵:1.8Na₂O:5R⁷:200H ₂O | 140 °C | Static 5 days | Amorphous |
| V22 | 20SiO₂³:1Al₂O₃⁵:1.8Na₂O:4.8R⁸: 400H₂O | 110°C | Static 5 days | Amorphous |
| V23 | 50SiO₂³:1Al₂O₃⁵:5Na₂O:12R⁸: 800H₂O | 160°C | Dynamic 1day | Amorphous |
| V24 | 20SiO₂³:1Al₂O₃⁶:4.0Na₂O:4R⁹: 400H₂O | 140°C | Dynamic 3 days | Amorphous |
| V25 | 15SiO₂⁴-1Al₂O₃⁶:3Na₂O:4R⁹: 280H₂O | 110°C | Dynamic 5 days | Amorphous |
| V26 | 100SiO₂⁴:1Al₂O₃⁶:10Na₂O:18R¹⁰: 2000H₂O | 120°C | Dynamic 5 days | Amorphous |
| V27 | 150SiO₂⁴:1Al₂O₃⁷:15Na₂O:30R¹⁰: 2800H₂O | 120°C | Dynamic 8 days | Amorphous |
| V28 | 80SiO₂⁴:1Al₂O₃⁷:10Na₂O:15R¹¹: 1500H₂O | 120°C | Dynamic 7 days | Amorphous |
| V29 | 40SiO₂⁴:1Al₂O₃⁷:5Na₂O:10R¹¹: 1500H₂O | 120°C | Dynamic 5 days | Amorphous |
| V30 | 150SiO₂⁴:1Al₂O₃⁷:14Na₂O:25R¹¹: 2500H₂O | 180 °C | Dynamic 0.5 day | Amorphous |

| | | | | |
|---|---|---|---|---|
| Note: Al₂O₃¹: Alumina; SiO₂¹: Silica sol; R¹: N,N-dimethyl-3,5-dipropylpiperidine hydroxide Al₂O₃²: Aluminum isopropoxide; SiO₂²: Ethyl orthosilicate; R²: N,N-diethyl-2,6-dimethylpiperidine hydroxide Al₂O₃³: Sodium aluminate; SiO₂³: Fumed silica; R³: N,N-diethyl-3,5 -dipropylpiperidine hydroxide Al₂O₃⁴: Aluminum nitrate; SiO₂⁴: Silica gel R⁴: N-ethyl-3-butylpyridine Al₂O₃⁵:Aluminum tri-sec-butoxide; R⁵: N,N-diethyl-3,5-dipropylpiperidine hydroxide Al₂O₃⁶: Aluminum sulfate; R⁶: 1,4-dipropylpiperazine Al₂O₃⁷: Aluminum powder; R⁷: N-methylpyridine R⁸: N-ethyl-3-buty1pyridine R⁹ : 1-ethyl-3-butydimidazole hydroxide R¹⁰: 1-ethyl-4-butyl-5-methylpiperazine R¹¹ : 1-ethyl-3-butyl-4-propylimidazole hydroxide | | | | |

### Example 7: Preparation of sample Y#1

Preparation of directing agent: 1.3 g sodium hydroxide (analytical purity, Tianjin Komiou Chemical Reagent Co., Ltd.) and 1.7 g alumina (chemical purity, China National Pharmaceutical (Group) Shanghai Chemical Reagent Co., Ltd.) were dissolved in 84.1 g tetraethylammonium hydroxide (35 wt% aqueous solution, Aladdin reagent (Shanghai) Co., Ltd.) and stirred until to be clear. 34.7g ethyl orthosilicate was added therein dropwise (chemical purity, China pharmaceutical (Group) Shanghai chemical reagent company) and stirred for 2 hours. The obtained solution was allowed to stand at 50 °C for 12 hours to perform aging, and then stand at 100 °C for 48 hours.

Preparation of synthetic gel: 0.7g sodium aluminate (Al₂O₃: 48.3wt%, Na₂O: 36.3wt%, China National Pharmaceutical (Group) Shanghai Chemical Reagent Company), 0.20 g sodium hydroxide, and 9.8 g tetrapropylammonium hydroxide (25wt%) were dissolved in 4.8g deionized water and stirred until to be clear.13.3g silica sol (SiO₂: 30wt%, Shenyang Chemical Co., Ltd.) was added therein dropwise and stirred for 2 hours. Then 4.9g the above-mentioned directing agent was added therein and stirred for 3 hours.

Synthesis of high-silica Y molecular sieve: The synthetic gel was transferred into a stainless-steel reactor, and was subject to rotational crystallization at 130 °C for 5 days. After the crystallization was completed, the obtained solid was separated from liquid, washed to be neutrality, then dried at 100 °C for 12 hours. The obtained sample was denoted as sample Y#1.

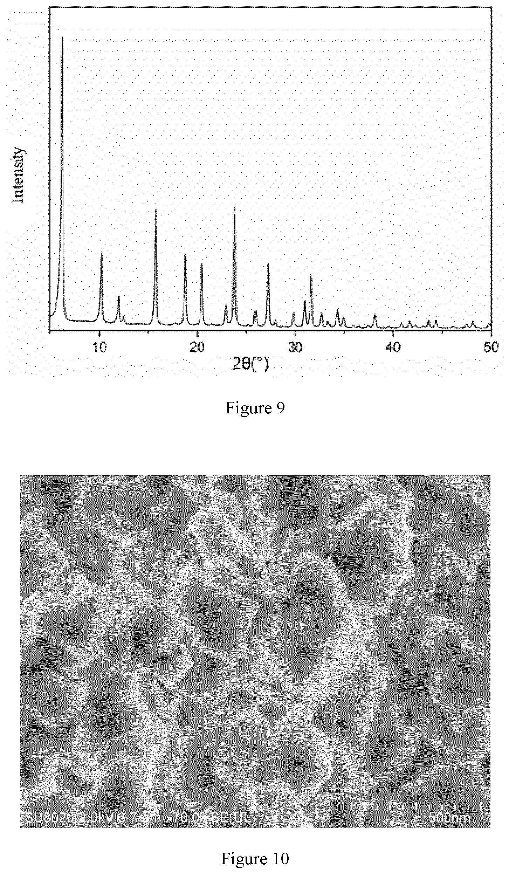

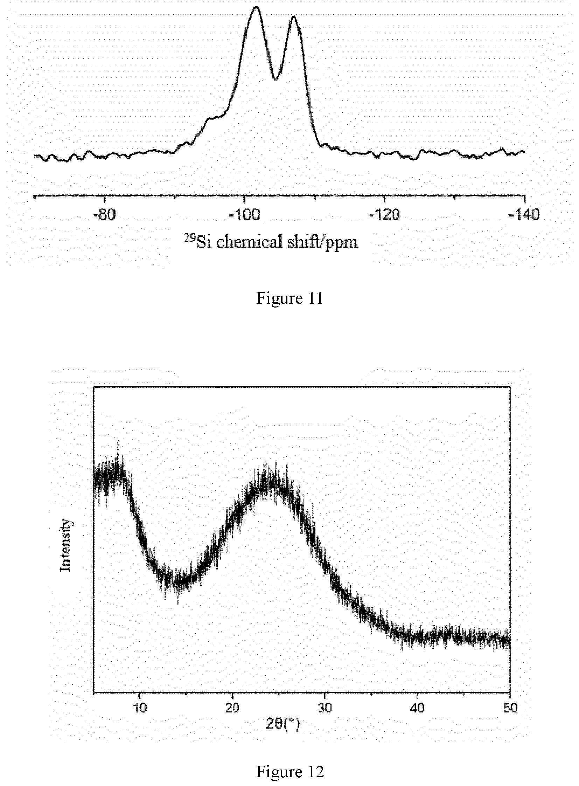

X-ray diffraction (XRD) spectrum of sample Y#1 is shown in Figure 9, demonstrating that the sample Y#1 is molecular sieve having FAU framework structure. Scanning electron microscope (SEM) image thereof is shown in Figure 10, demonstrating that the particles of sample Y#1 are small pieces with a size ranging from 50 nm to 200 nm. ²⁹Si MAS NMR spectrum thereof is shown in Figure 11. The fitting calculation shows that the silica-alumina ratio in the framework is consistent with the calculation results conducted by XRF. According to the XRF and ¹³C MAS NMR normalization analysis, the element constitution of sample Y1 is 0.07Na·0.02R1²·0.05R2¹ (Si_{0.86}Al_{0.14})O₂, where R1² is tetraethylammonium hydroxide, R2¹ is tetrapropylammonium hydroxide.

### Example 8: Preparation of samples Y#2-Y#30

The preparation process of any one of samples Y#2-Y#30 is the same as that of Example 7. The raw materials for preparing samples Y#2-Y#30, molar ratio thereof, crystallization conditions, crystal structure, and silica-alumina ratio (the silica-alumina ratio of the obtained product is measured by X-ray fluorescence analyzer (XRF)) are shown in Table 5. Aging temperature and time for preparing directing agent, aging manner, addition amount of directing agent and sample constitution are shown in Table 6.

**Table 5 Types of raw materials, molar ratio thereof, crystallization conditions, crystal structure and silica-alumina ratio of samples Y#1-Y#30**

| Sample | Directing agent constitution | Initial gel constitution | Crystallization temperature | Crystallization time | Crystal structure | Silica-alumina ratio of product |
|---|---|---|---|---|---|---|
| Y#1 | 10SiO₂¹:1Al₂O₃¹ :1Na₂O:12R1² :180H₂O | 20SiO₂¹:1Al₂O₃³:2.0Na₂O:3.6R2 ¹:360H₂O | 130 °C | Dynamic 5 days | FAU | 12 |
| Y#2 | 10SiO₂¹:1Al₂O₃¹ :1Na₂O:10R1³ :180H₂O | 15SiO₂¹:1Al₂O₃³:1.8Na₂O:3R2¹: 200H₂O | 130 °C | Static 4 days | FAU | 9 |
| Y#3 | 30SiO₂:1Al₂O₃⁴ :1.5K₂O:30R1¹: 600H₂O | 20SiO₂¹:1Al₂O₃²:1.8K₂O:4R2¹:4 00H₂O | 110 °C | Dynamic 6 days | FAU | 11 |
| Y#4 | 20SO₂¹:1Al₂O₃¹:10R1³:8R1¹:4 00H₂O | 50SiO₂¹:1Al₂O₃¹:8.0Na₂O:9R2²: 800H₂O | 160 °C | Dynamic 3 days | FAU | 15 |
| Y#5 | 10SiO₂² :1Al₂O₃² :0.5Na₂O:10R 1³:200H₂O | 20SiO₂² :1Al₂O₃²:3.0Na₂O:4R2²: 400H₂O | 120 °C | Static 6 days | FAU | 8 |
| Y#6 | 10SiO₂² :1Al₂O₃²:0.5Na₂O:14R 1²:200H₂O | 20SiO₂² :1Al₂O₃¹ :4.0Na₂O:4R2³ :400H₂O | 130 °C | Static 3 days | FAU | 11 |
| Y#7 | 10SiO₂² :1Al₂O₃¹ :1Cs₂O:10R1³ :180H₂O | 200SiO₂² :1Al₂O₃² :25Cs₂O:40R 2³:3000H₂O | 120 °C | Dynamic 8 days | FAU | 28 |
| Y#8 | 30SiO₂² :1Al₂O₃⁴:1.5Na₂O:35R 1²:600H₂O | 50SiO₂² :1Al₂O₃² :8.0Na₂O:6R2³ :800H₂O | 140 °C | Dynamic 6 days | FAU | 18 |
| Y#9 | 30SiO₂²:1Al₂O₃⁴ :1.0Na₂O:34R 1⁴:600H₂O | 60SiO₂²:1Al₂O₃²: 9.0Na₂O:8R2³:900H₂O | 140 °C | Dynamic 6 days | FAU | 20 |
| Y#10 | 15SiO₂³: 1Al₂O₃¹: 1.8Na₂O: 12R1¹: 180H₂O | 15SiO₂² :1Al₂O₃² :1.8Na₂O:4R2⁴ :200H₂O | 120 °C | Static 8 days | FAU | 9 |
| Y#11 | 10SiO₂³:1Al₂O₃²:1Na₂O:10R1³: 180H₂O | 30SiO₂² :1Al₂O₃³ :5.0Na₂O:6R2⁴ :500H₂O | 120 °C | Static 10 days | FAU | 13 |
| Y#12 | 15SiO₂³:1Al₂O₃¹:1.8Na₂O: 12R1¹: 180H₂O | 20SiO₂²:1Al₂O₃¹ :3.0Na₂O:5R2⁴: 400H₂O | 120 °C | Static 12 days | FAU | 10 |
| Y#13 | 10SiO₂³:1Al₂O₃²:1Na₂O:10R1³: 180H₂O | 30SiO₂²:1Al₂O₃¹ :5.0Na₂O:6R2⁵: 500H₂O | 100 °C | Static 8 days | FAU | 13 |
| Y#14 | 15SiO₂¹:1Al₂O₃³:1Na₂O:10R1¹: 200H₂O | 100SiO₂²:1Al₂O₃¹ :12Na₂O:20R 2⁵:2000H₂O | 120 °C | Dynamic 5 days | FAU | 20 |
| Y#15 | 10SiO₂¹:1Al₂O₃³:2Na₂O:8R1³:1 00H₂O | 150SiO₂¹: 1Al₂O₃²: 15Na₂O:28R2 ⁵:2800H₂O | 120 °C | Dynamic 5 days | FAU | 25 |
| Y#16 | 15SiO₂¹:1Al₂O₃²:15R1¹:250H₂ O | 80SiO₂¹:1Al₂O₃²:10Na₂O:15R2⁵: 1500H₂O | 110 °C | Dynamic 5 days | FAU | 18 |
| Y#17 | 30SiO₂¹:1Al₂O₃¹³:20R1¹:600H₂ O | 100SiO₂¹:1Al₂O₃³:12Na₂O:20R2 ⁶:1800H₂O | 115 °C | Dynamic 5 days | FAU | 20 |
| Y#18 | 5SiO₂¹:1Al₂O₃¹:1Na₂O:10R1¹:1 00H₂O | 60SiO₂¹: 1Al₂O₃³:5Na₂O: 12R2⁶: 1 100H₂O | 130 °C | Dynamic 8 days | FAU | 15 |
| Y#19 | 15SiO₂¹:1Al₂O₃¹:1.8Na₂O:12 R1⁴:180H₂O | 45SiO₂¹:1Al₂O₃³:4Na₂O:8R2⁶:80 0H₂O | 120 °C | Static 8 days | FAU | 14 |
| Y#20 | 20SiO₂⁴:1Al₂O₃⁴:5Na₂O:18 R1¹:400H₂O | 10SiO₂³:1Al₂O₃²:0.1Na₂O:4R2⁷: 150H₂O | 90 °C | Static 15 days | FAU | 7 |
| Y#21 | 10SiO₂⁴:1Al₂O₃⁷:0.5Na₂O: 8R1¹:200H₂O | 15SiO₂³:1Al₂O₃²:1.8Na₂O:3R2⁷: 200H₂O | 140 °C | Static 5 days | FAU | 8 |
| Y#22 | 15SiO₂²:1Al₂O₃⁷:0.5Na₂O:12R1 ³:280H₂O | 20SiO₂³: 1Al₂O₃⁵: 1.8Na₂O: 4R2⁸: 400H₂O | 110 °C | Static 5 days | FAU | 12 |
| Y#23 | 12SiO₂¹:1Al₂O₃⁷ :0.5Na₂O:10R 1⁴:200H₂O | 50SiO₂³:1Al₂O₃⁵:5Na₂O: 8R2⁸: 800H₂O | 120 °C | Dynamic 6 days | FAU | 20 |
| Y#24 | 20SiO₂⁴:1Al₂O₃5:0.5Na₂O:18R1 ¹:400H₂O | 20SiO₂³:1Al₂O₃⁶:4.0Na₂O: 4R2⁹: 400H₂O | 140 °C | Dynamic 5 days | FAU | 12 |
| Y#25 | 10SiO₂¹:1Al₂O₃⁵:0.5Na₂O: 8 R1¹:400H₂O | 15SiO₂⁴:1Al₂O₃⁶ :3.0Na₂O:4R2⁹: 280H₂O | 110 °C | Dynamic 5 days | FAU | 10 |
| Y#26 | 8SiO₂¹:1Al₂O₃⁵: 8R1¹:150H₂O | 100SiO₂⁴:1Al₂O₃⁷ :10Na₂O:18R 2¹⁰:2000H₂O | 120 °C | Dynamic 5 days | FAU | 20 |
| Y#27 | 10SiO₂³:1Al₂O₃⁵:2Na₂O: 7R1¹:180H₂O | 150S₁O₂⁴:1Al₂O₃⁷ :15Na₂O:30R 2¹⁰:2800H₂O | 120 °C | Dynamic 8 days | FAU | 30 |
| Y#28 | 9SiO₂²:1Al₂O₃⁶:0.5Na₂O: 8R1³:150H₂O | 80SiO₂⁴:1Al₂O₃⁷ :10Na₂O:15R2¹¹:1500H₂O | 120 °C | Dynamic 7 days | FAU | 16 |
| Y#29 | 25SiO₂⁴: 1Al₂O₃⁶: 1Na₂O: 8R1²:480H₂O | 40SiO₂⁴:1Al₂O₃⁷ :5Na₂O:10R2¹¹ :1500H₂O | 120 °C | Dynamic 5 days | FAU | 12 |
| Y#30 | 30SiO₂⁴:1Al₂O₃⁶:3Na₂O: 40 R1¹:600H₂O | 150SiO₂⁴:1Al₂O₃⁷:14Na₂O:25R2 ¹¹:2500H₂O | 180 °C | Dynamic 3 days | FAU | 25 |

| | | | | | | |
|---|---|---|---|---|---|---|
| Note: Al₂O₃¹: Alumina; SiO₂¹: Silica Sol; R1¹: Tetramethylammonium hydroxide; R2¹: Tetrapropylammonium hydroxide Al₂O₃²:Aluminum isopropoxide; SiO₂²: Ethyl orthosilicate; R1²:Tetraethylammonium hydroxide; R2²: Triethylhexylammonium hydroxide Al₂O₃³: Sodium aluminate; SiO₂³: Fumed silica; R1³:Tetrapropylainmonium hydroxide; R2³ :Triethylbenzylammonium hydroxide Al₂O₃⁴: Aluminum nitrate; SiO₂⁴: Silica gel; R1⁴: Choline; R2⁴:N,N,N-tripropyladamantylammonium hydroxide; Al₂O₃⁵: Aluminum 2-butoxide; R2⁵: Dipropyldibutyl ammonium hydroxide Al₂O₃⁶: Aluminum sulfate; R2⁶: Benzyltripropylammonium hydroxide Al₂O₃⁶: Aluminum powder; R2⁷: Choline; R2⁸: Tetrabutylammonium hydroxide R2⁹: Tetrahexylammonium hydroxide R2¹⁰: Butyl-hydroxyethylammonium hydroxide R2¹¹: Tripropyl-hydroxyethylammonium hydroxide | | | | | | |

**Table 6 Aging temperature and time for preparing directing agent, addition amount of directing agent and sample constitution of samples Y#1-Y#30**

| Sample | Aging time for preparing directing agent | Addition amount of directing agent | Sample constitution |
|---|---|---|---|
| Y#1 | 40 °C 5 days + 60 °C 4 days | 8% | 0.07Na 0.02R1² 0.05R2¹ (Si_{0.86}Al_{0.14})O₂ |
| Y#2 | 120 °C 1day | 15% | 0.09Na 0.04R1³ 0.05R2¹ (Si_{0.82}Al_{0.18})O₂ |
| Y#3 | 40 °C 1day +80 °C 4 days | 10% | 0.07K 0.03R1¹ 0.05R2¹ (Si_{0.85}Al_{0.15})O₂ |
| Y#4 | 100 °C 2 days | 10% | 0.03Na 0.04R1¹ 0.05R2² (Si_{0.88}Al_{0.12})O₂ |
| Y#5 | 90 °C 3 days | 20% | 0.08Na 0.04R1³ 0.08R2² (Si_{0.8}Al_{0.2})O₂ |
| Y#6 | 80 °C 5 days | 10% | 0.07Na 0.04R1² 0.06R2³ (Si_{0.85}Al_{0.15})O₂ |
| Y#7 | 40 °C 0.5 day+80 °C 2 days | 5% | 0.02Cs 0.01R1¹ 0.04R2³ (Si_{0.93}Al_{0.07})O₂ |
| Y#8 | 40 °C 0.5 day+60 °C 2 days | 8% | 0.03Na 0.04R1² 0.04R2³ (Si_{0.90}Al_{0.10})O₂ |
| Y#9 | 30 °C 3 days +100 °C 2 days | 10% | 0.03Na 0.02R1⁴ 0.04R2³ (Si_{0.91}Al_{0.09})O₂ |
| Y#10 | 30 °C 3 days +50 °C 8 days | 12% | 0.09Na 0.04R1¹ 0.05R2⁴ (Si_{0.82}Al_{0.18})O₂ |
| Y#11 | 40 °C 15 days | 1% | 0.07Na 0.02R1³ 0.04R2⁴ (Si_{0.87}Al_{0.13})O₂ |
| Y#12 | 30 °C 25 days | 5% | 0.09Na 0.02R1¹ 0.06R2⁴ (Si_{0.83}Al_{0.17})O₂ |
| Y#13 | 100 °C 5 days | 15% | 0.09Na 0.02R1³ 0.05R2⁵ (Si_{0.84}Al_{0.16})O₂ |
| Y#14 | 80 °C 7 days | 2% | 0.04Na 0.01R1¹ 0.04R2⁵ (Si_{0.91}Al_{0.09})O₂ |
| Y#15 | 110 °C 1.5 days | 18% | 0.03Na 0.01R1³ 0.03R2⁵ (Si_{0.93}Al_{0.07})O₂ |
| Y#16 | 90 °C 3 days | 18% | 0.04Na 0.02R1¹0.04R2⁵ (Si_{0.90}Al_{0.10})O₂ |
| Y#17 | 80 °C 5 days | 18% | 0.03Na 0.02R1¹ 0.04R2⁶ (Si_{0.91}Al_{0.09})O₂ |
| Y#18 | 60 °C 8 days | 8% | 0.06Na 0.02R1¹ 0.04R2⁶ (Si_{0.88}Al_{0.12})O₂ |
| Y#19 | 40 °C 11 days | 11% | 0.06Na 0.02R1⁴ 0.04R2⁶ (Si_{0.88}Al_{0.12})O₂ |
| Y#20 | 80 °C 7 days | 3% | 0.13Na 0.04R1¹ 0.05R2⁷ (Si_{0.78}Al_{0.22})O₂ |
| Y#21 | 80 °C 7 days | 10% | 0.11Na 0.04R1¹ 0.05R2⁷ (Si_{0.80}Al_{0.20})O₂ |
| Y#22 | 100 °C 5 days | 10% | 0.09Na 0.02R1³ 0.03R2⁸ (Si_{0.86}Al_{0.14})O₂ |
| Y#23 | 110 °C 2 days | 10% | 0.03Na 0.02R1⁴ 0.04R2⁸ (Si_{0.91}Al_{0.09})O₂ |
| Y#24 | 70 °C 7 days | 18% | 0.08Na 0.01R1¹ 0.05R2⁹ (Si_{0.86}Al_{0.14})O₂ |
| Y#25 | 80 °C 5 days | 8% | 0.09Na 0.04R1¹ 0.04R2⁹ (Si_{0.83}Al_{0.17})O₂ |
| Y#26 | 60 °C 8 days | 9% | 0.04Na 0.02R1¹ 0.03R2¹⁰ (Si_{0.91}Al_{0.09})O₂ |
| Y#27 | 120 °C 1day | 20% | 0.02Na 0.01R1¹ 0.03R2¹⁰ (Si_{0.94}Al_{0.06})O₂ |
| Y#28 | 110 °C 3 days | 10% | 0.04Na 0.04R1³ 0.03R2¹¹ (Si_{0.89}Al_{0.11})O₂ |
| Y#29 | 110 °C 3 days | 10% | 0.06Na 0.03R1² 0.05R2¹¹ (Si_{0.86}Al_{0.14})O₂ |
| Y#30 | 80 °C 7 days | 10% | 0.02Na 0.01R1¹ 0.04R2¹¹ (Si_{0.93}Al_{0.07})O₂ |

| | | | |
|---|---|---|---|
| Note: R1¹: tetramethylammonium hydroxide; R2¹:tetrapropylammonium hydroxide R1²: Tetraethylammonium hydroxide; R2²: Triethyl-hexylammonium hydroxide R1³: Tetrapropylammonium hydroxide; R2³:Triethylbenzylammonium hydroxide R1⁴: Choline; R2⁴: N,N,N -tripropyladamantylammonium hydroxide; R2⁵: Dipropyl-dibutylammonium hydroxide; R2⁶ : Tripropyl-benzylammonium hydroxide R2⁷: Choline R2⁸: Tetrabutylammonium hydroxide R2⁹ : Tetrahexylammonium hydroxide R2¹⁰: Tributyl-hydroxyethyl ammonium hydroxide R2¹¹ : Tripropyl-hydroxyethylammonium hydroxide | | | |

### Comparative Example 3: Preparation of comparative samples S#1-S#30

The specific types of raw materials for preparing synthetic gel, molar ratio thereof, preparation process and crystallization conditions are the same as those in the preparation of sample Y#1 in Example 7. There is no directing agent preparation step, and there is not addition of directing agent in the subsequent gel synthesis step. The types of raw materials, molar ratio thereof, crystallization conditions, and crystal structures of product are shown in Table 7. The obtained samples are denoted as comparative samples S#1-S#30.

**Table 7 Types of raw materials, molar ratio thereof, crystallization conditions, and crystal structure of samples S#1-S#30**

| Sample | Initial gel constitution | Crystallization temperature | Crystallization time | Product structure |
|---|---|---|---|---|
| S#1 | 20SiO₂¹:1Al₂O₃³:2.0Na₂O:3.6R2¹:360H₂O | 130 °C | Dynamic 5 days | Amorphous |
| S#2 | 15SiO₂¹:1Al₂O₃³:1.8Na₂O:3R2¹:200H₂O | 130 °C | Static 4 days | Amorphous |
| S#3 | 20SiO₂¹:1Al₂O₃²: 1.8K₂O:4R2¹:400H₂O | 110 °C | Dynamic 6 days | Amorphous |
| S#4 | 50SiO₂¹:1Al₂O₃¹:8.0Na₂O:9R2²:800H₂O | 160 °C | Dynamic 3 days | Amorphous |
| S#5 | 20SiO₂² :1Al₂O₃²:3.0Na₂O:4R2²:400H₂O | 120 °C | Static 6 days | Amorphous |
| S#6 | 20SiO₂² :1Al₂O₃¹ :4.0Na₂O:4R2³:400H₂O | 130 °C | Static 3 days | Amorphous |
| S#7 | 200SiO₂² :1Al₂O₃² :25Cs₂O:40R2³:3000H₂O | 120 °C | Dynamic 8 days | Amorphous |
| S#8 | 50SiO₂² :1Al₂O₃²:8.0Na₂O:6R2³:800H₂O | 140 °C | Dynamic 6 days | Amorphous |
| S#9 | 60SiO₂²:1Al₂O₃²:9.0Na₂O:8R2³:900H₂O | 140 °C | Dynamic 6 days | Amorphous |
| S#10 | 15SiO₂²:1Al₂O₃²:1.8Na₂O:4R2⁴:200H₂O | 120 °C | Static 8 days | Amorphous |
| S#11 | 30SiO₂² :1Al₂O₃³ :5.0Na₂O:6R2⁴:500H₂O | 120 °C | Static 10 days | Amorphous |
| S#12 | 20SiO₂²:1Al₂O₃¹ :3.0Na₂O:5R2⁴:400H₂O | 120 °C | Static 12 days | Amorphous |
| S#13 | 30SiO₂²:1Al₂O₃¹ :5.0Na₂O:6R2⁵:500H₂O | 100 °C | Static 8 days | Amorphous |
| S#14 | 100SiO₂²: 1Al₂O₃¹ :12Na₂O:20R2⁵:2000H₂O | 120 °C | Dynamic 5 days | Amorphous |
| S#15 | 150SiO₂¹: 1Al₂O₃²: 15Na₂O:28R2⁵:2800H₂O | 120 °C | Dynamic 5 days | Amorphous |
| S#16 | 80SiO₂¹:1Al₂O₃²:10Na₂O:15R2⁵:1500H₂O | 110 °C | Dynamic 5 days | Amorphous |
| S#17 | 100SiO₂¹:1Al₂O₃³:12Na₂O:20R2⁶:1800H₂O | 115 °C | Dynamic 5 days | Amorphous |
| S#18 | 60SiO₂¹:1Al₂O₃³:5Na₂O:12R2⁶:1100H₂O | 130 °C | Dynamic 8 days | Amorphous |
| S#19 | 45SiO₂¹:1Al₂O₃³:4Na₂O:8R2⁶:800H₂O | 120 °C | Static 8 days | Amorphous |
| S#20 | 10SiO₂³:1Al₂O₃²:0.1Na₂O:4R2⁷:150H₂O | 90 °C | Static 15 days | Amorphous |
| S#21 | 15SiO₂³:1Al₂O₃²:1.8Na₂O:3R2⁷:200H₂O | 140 °C | Static 5 days | Amorphous |
| S#22 | 20SiO₂³:1Al₂O₃⁵:1.8Na₂O: 4R2⁸: 400H₂O | 110 °C | Static 5 days | Amorphous |
| S#23 | 50SiO₂³:1Al₂O₃⁵:5Na₂O: 8R2⁸: 800H₂O | 120 °C | Dynamic 6 days | Amorphous |
| S#24 | 20SiO₂³:1Al₂O₃⁶:4.0Na₂O: 4R2⁹: 400H₂O | 140 °C | Dynamic 5 days | Amorphous |
| S#25 | 15SiO₂⁴:1Al₂O₃⁶ :3.0Na₂O:4R2⁹:280H₂O | 110 °C | Dynamic 5 days | Amorphous |
| S#26 | 100SiO₂⁴:1Al₂O₃⁷ :10Na₂O:18R2¹⁰:2000H₂O | 120 °C | Dynamic 5 days | Amorphous |
| S#27 | 150SiO₂⁴:1Al₂O₃⁷ :15Na₂O:30R2¹⁰:2800H₂O | 120 °C | Dynamic 8 days | Amorphous |
| S#28 | 80SiO₂⁴:1Al₂O₃⁷ :10Na₂O:15R2¹¹:1500H₂O | 120 °C | Dynamic 7 days | Amorphous |
| S#29 | 40SiO₂⁴:1Al₂O₃⁷ :5Na₂O:10R2¹¹:1500H₂O | 120 °C | Dynamic 5 days | Amorphous |
| S#30 | 150SiO₂⁴:1Al₂O₃⁷ :14Na₂O:25R2¹¹:2500H₂O | 180 °C | Dynamic 3 days | Amorphous |

| | | | | |
|---|---|---|---|---|
| Note: Al₂O₃¹: alumina; SiO₂¹: silica sol; R2¹: tetrapropylammonium hydroxide; Al₂O₃² : Aluminum isopropoxide; SiO₂²: Ethyl orthosilicate; R2²: Triethyl-hexylammonium hydroxide; Al₂O₃³:Sodium aluminate; SiO₂³: Fumed silica; R2³: triethyl-benzylammonium hydroxide; Al₂O₃⁴: Aluminum nitrate; SiO₂⁴:Silica gel; R2⁴:N,N,N-tripropyladamantylammonium hydroxide; Al₂O₃⁵:Aluminum 2-butoxide; R2⁵: Dipropyldibutyl ammonium hydroxide; Al₂O₃⁶: Aluminum sulfate; R2⁶: Benzyltripropylammonium hydroxide Al₂O₃⁷: Aluminum powder; R2⁷: Choline R2⁸ : Tetrabutylammonium hydroxide R2⁹ : Tetrahexylammonium hydroxide R2¹⁰: Tributyl-hydroxyethyl ammonium hydroxide R2¹¹ : Tripropyl-hydroxyethylammonium hydroxide | | | | |

### Comparative Example 4: Preparation of comparative samples T#1-T#30

The specific types of raw materials, molar ratio thereof, preparation process and crystallization conditions are the same as those of sample Y#1 in Example 7, except that, after the batching step of the directing agent is completed, only stirring at room temperature for 2 hours without aging was performed. The types of raw materials, molar ratio thereof, crystallization conditions, addition amount of directing agent, and the crystal structure of the prepared product are shown in Table 8. The obtained samples were denoted as comparative samples T#1-T#30.

**Table 8 Types of raw materials, addition amount of directing agent, molar ratio thereof, crystallization conditions, and crystal structure of samples T#1-T#30**

| Sample | Directing agent constitution | Addition amount of directing agent | Initial gel constitution | Crystalli zation temperat ure | Crystalliz ation time | Crystal structure |
|---|---|---|---|---|---|---|
| T#1 | 10SiO₂¹:1Al₂O₃¹: 1Na₂O:12R1²: 180H₂O | 8% | 20SiO₂¹:1Al₂O₃³:2.0Na₂O:3.6R2¹ :360H₂O | 130 °C | Dynamic 5 days | Amorpho us |
| T#2 | 10SiO₂¹:1Al₂O₃¹ :1Na₂O:10R1³ :180H₂O | 15% | 15SiO₂²:1Al₂O₃³:1.8Na₂O:3R2¹:2 00H₂O | 130 °C | Static 4 days | Amorpho us |
| T#3 | 30SiO₂:1Al₂O₃⁴ :1.5K₂O:30R1¹: 600H₂O | 10% | 20SiO₂¹:1Al₂O₃²:1.8K₂O:4R2¹:40 0H₂O | 110 °C | Dynamic 6 days | Amorpho us |
| T#4 | 20SiO₂¹:1Al₂O₃¹:10R1³:8R1¹:4 00H₂O | 10% | 50SiO₂¹:1Al₂O₃¹:8.0Na₂O:9R2²:8 00H₂O | 160 °C | Dynamic 3 days | Amorpho us |
| T#5 | 10SiO₂² :1Al₂O₃² :0.5Na₂O:10R 1³:200H₂O | 20% | 20SiO₂² :1Al₂O₃²:3.0Na₂O:4R2²: 400H₂O | 120 °C | Static 6 days | Amorpho us |
| T#6 | 10SiO₂² : 1Al₂O₃²:0.5Na₂O:14R 1²:200H₂O | 10% | 20SiO₂² :1Al₂O₃¹ :4.0Na₂O:4R2³: 400H₂O | 130 °C | Static 3 days | Amorpho us |
| T#7 | 10SiO₂² :1Al₂O₃¹ :1Cs₂O:10R1³ :180H₂O | 5% | 200SiO₂² : 1Al₂O₃² :25Cs₂O:40R2 ³:3000H₂O | 120 °C | Dynamic 8 days | Amorpho us |
| T#8 | 30SiO₂²:1Al₂O₃⁴ :1.5Na₂O:35R 1²:600H₂O | 8% | 50SiO₂² :1Al₂O₃² :8.0Na₂O:6R2³: 800H₂O | 140 °C | Dynamic 6 days | Amorpho us |
| T#9 | 30SiO₂²:1Al₂O₃⁴ :1.0Na₂O:34R 1⁴:600H₂O | 10% | 60SiO₂²:1Al₂O₃²: 9.0Na₂O:8R2³:900H₂O | 140 °C | Dynamic 6 days | Amorpho us |
| T#10 | 15SiO₂³:1Al₂O₃¹:1.8Na₂O: 12R1¹: 180H₂O | 12% | 15SiO₂² :1Al₂O₃² :1.8Na₂O:4R2⁴: 200H₂O | 120 °C | Static 8 days | Amorpho us |
| T#11 | 10SiO₂³:1Al₂O₃²: 1Na₂O:10R1³: 180H₂O | 1% | 30SiO₂² :1Al₂O₃³ :5.0Na₂O:6R2⁴: 500H₂O | 120 °C | Static 10 days | Amorpho us |
| T#12 | 15SiO₂³:1Al₂O₃¹:1.8Na₂O: 12R1¹: 180H₂O | 5% | 20SiO₂²:1Al₂O₃¹ :3.0Na₂O:5R2⁴: 400H₂O | 120 °C | Static 12 days | Amorpho us |
| T#13 | 10SiO₂³:1Al₂O₃²: 1Na₂O:10R1³: 180H₂O | 15% | 30SiO₂²:1Al₂O₃¹ :5.0Na₂O:6R2⁵: 500H₂O | 100 °C | Static 8 days | Amorpho us |
| T#14 | 15SiO₂¹:1Al₂O₃³:1Na₂O:10R1¹: 200H₂O | 2% | 100SiO₂²:1Al₂O₃¹ :12Na₂O:20R2 ⁵:2000H₂O | 120 °C | Dynamic 5 days | Amorpho us |
| T#15 | 10SiO₂¹:1Al₂O₃³:2Na₂O:8R1³:1 00H₂O | 18% | 150SiO₂¹:1Al₂O₃²:15Na₂O:28R2⁵ :2800H₂O | 120 °C | Dynamic 5 days | Amorpho us |
| T#16 | 15SiO₂¹:1Al₂O₃²:15R1¹:250H₂ O | 18% | 80SiO₂¹:1Al₂O₃²:10Na₂O:15R2⁵: 1500H₂O | 110 °C | Dynamic 5 days | Amorpho us |
| T#17 | 30SiO₂¹:1Al₂O₃¹³:20R1¹:600H₂ O | 18% | 100SiO₂¹:1Al₂O₃³:12Na₂O:20R2⁶ :1800H₂O | 115 °C | Dynamic 5 days | Amorpho us |
| T#18 | 5SiO₂¹:1Al₂O₃¹:1Na₂O:10R1¹:1 00H₂O | 8% | 60SiO₂¹:1Al₂O₃³:5Na₂O:12R2⁶:1 100H₂O | 130 °C | Dynamic 8 days | Amorpho us |
| T#19 | 15SiO₂¹:1Al₂O₃¹ :1.8Na₂O:12R 1⁴:180H₂O | 11% | 45SiO₂¹:1Al₂O₃³:4Na₂O:8R2⁶:80 0H₂O | 120 °C | Static 8 days | Amorpho us |
| T#20 | 20SiO₂⁴:1Al₂O₃⁴ :5Na₂O:18R1¹ :400H₂O | 3% | 10SiO₂³:1Al₂O₃²:0.1Na₂O:4R2⁷:1 50H₂O | 90 °C | Static 15 days | Amorpho us |
| T#21 | 10SiO₂⁴:1Al₂O₃⁷ :0.5Na₂O:8R1¹ :200H₂O | 10% | 15SiO₂³:1Al₂O₃²:1.8Na₂O:3R2⁷:2 00H₂O | 140 °C | Static 5 days | Amorpho us |
| T#22 | 15SiO₂² :1Al₂O₃⁷ :0.5Na₂O:12R 1³:280H₂O | 10% | 20SiO₂³:1Al₂O₃⁵:1.8Na₂O: 4R2⁸: 400H₂O | 110 °C | Static 5 days | Amorpho us |
| T#23 | 12SiO₂¹:1Al₂O₃⁷ :0.5Na₂O:10R 1⁴:200H₂O | 10% | 50SiO₂³:1Al₂O₃⁵:5Na₂O: 8R2⁸: 800H₂O | 120 °C | Dynamic 6 days | Amorpho us |
| T#24 | 20SiO₂⁴:1Al₂O₃⁵ :0.5Na₂O:18R 1¹:400H₂O | 18% | 20SiO₂³:1Al₂O₃⁶:4.0Na₂O: 4R2⁹: 400H₂O | 140 °C | Dynamic 5 days | Amorpho us |
| T#25 | 10SiO₂¹:1Al₂O₃⁵ :0.5Na₂O:8R1¹ :400H₂O | 8% | 15SiO₂⁴:1Al₂O₃⁶ :3.0Na₂O:4R2⁹: 280H₂O | 110 °C | Dynamic 5 days | Amorpho us |
| T#26 | 8SiO₂¹:1Al₂O₃⁵: 8R1¹:150H₂O | 9% | 100SiO₂⁴:1Al₂O₃⁷ :10Na₂O:18R2 ¹⁰:2000H₂O | 120 °C | Dynamic 5 days | Amorpho us |
| T#27 | 10SiO₂³:1Al₂O₃⁵:2Na₂O: 7R1¹: 180H₂O | 20% | 150SiO₂⁴:1Al₂O₃⁷ :15Na₂O:30R2 ¹⁰:2800H₂O | 120 °C | Dynamic 8 days | Amorpho us |
| T#28 | 9SiO₂² :1Al₂O₃⁶ :0.5Na₂O:8R1³ :150H₂O | 10% | 80SiO₂⁴:1Al₂O₃⁷ :10Na₂O:15R2¹¹ :1500H₂O | 120 °C | Dynamic 7 days | Amorpho us |
| T#29 | 25SiO₂⁴:1Al₂O₃⁶:1Na₂O:8R1²:4 80H₂O | 10% | 40SiO₂⁴:1Al₂O₃⁷ :5Na₂O:10R2¹¹: 1500H₂O | 120 °C | Dynamic 5 days | Amorpho us |
| T#30 | 30SiO₂⁴:1Al₂O₃⁶ :3Na₂O:40R1¹ :600H₂O | 10% | 150SiO₂⁴:1Al₂O₃⁷ :14Na₂O:25R2 ¹¹:2500H₂O | 180 °C | Dynamic 3 days | Amorpho us |

| | | | | | | |
|---|---|---|---|---|---|---|
| Note: Al₂O₃¹: Alumina; SiO₂¹: Silica sol; R1¹: Tetramethylammonium hydroxide; R2¹: Tetrapropylammonium hydroxide; Al₂O₃²:Aluminum isopropoxide; SiO₂²: Ethyl orthosilicate; R1²:Tetraethylammonium hydroxide; R2²: Triethylhexylammonium hydroxide; Al₂O₃³:Sodium aluminate; SiO₂³: Fumed silica; R1³:Tetrapropylammonium hydroxide; R2³:Triethylbenzylammonium hydroxide; Al₂O₃⁴: Aluminum nitrate; SiO₂⁴: Silica gel; R1⁴: Choline; R2⁴: N,N,N-tripropyladamantyl ammonium hydroxide Al₂O₃⁵: Aluminum 2-butoxide; R2⁵: Dipropyldibutyl ammonium hydroxide; Al₂O₃⁶: Aluminum sulfate; R2⁶: Benzyltripropyl ammonium hydroxide Al₂O₃⁷: Aluminum powder; R2⁷: Choline; R2⁸: Tetrabutylammonium hydroxide R2⁹: Tetrahexylammonium hydroxide R2¹⁰: Tributyl-hydroxyethyl ammonium hydroxide R2¹¹:Tripropyl-hydroxyethylammonium hydroxide | | | | | | |

### Example 9: Characterization and analysis of samples Y#1-Y#30 and comparative samples S#1 and T#1

The phases of samples Y#1-Y#30 and comparative samples S#1-S#30 and T#1-T#30 were analyzed by X-ray diffraction method.

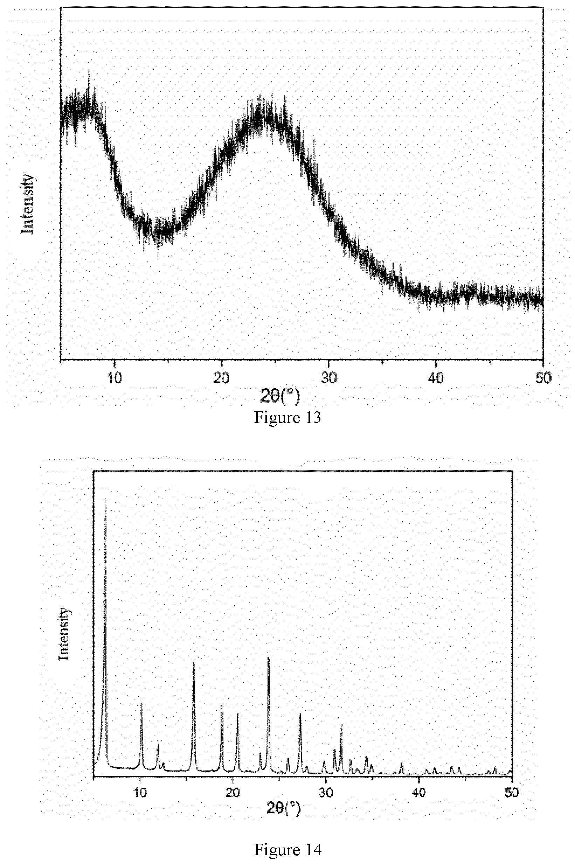

The results show that the each of samples Y#1-Y#30 prepared in Examples 7 and 8 is Y molecular sieve with both high purity and high crystallinity. The XRD spectrum of sample Y#1 as typical representative is shown in Figure 9, SEM image thereof is shown in Figure 10, and Si NMR thereof is shown in Figure 11. The XRD spectrum result of any one of samples Y#2-Y#30 is close to Figure 9. In other words, the diffraction peak positions and shapes are substantially identical. The relative peak intensity fluctuates within ±5% depending on the change of synthesis conditions, demonstrating that any of samples Y#1-Y#30 has the structural characteristics of Y zeolite and has no impurities. The comparative samples S#1-S#30 and the comparative samples T#1-T#30 in Table 7 and Table 8 are amorphous. The XRD spectra of the comparative sample S#1 and the comparative sample T#1 are shown in Figures 12 and 13, respectively. It can be seen that, during the synthesis of high-silica Y molecular sieve, the addition of a directing agent is necessary, and high-temperature aging must be carried out during preparation of the directing agent to induce crystallization, which is the key to the synthesis of high-silica Y molecular sieve.

### Example 10 Preparation of sample Y1

Preparation of directing agent: 1.3 g sodium hydroxide (analytical purity, Tianjin Komiou Chemical Reagent Co., Ltd. ) and 1.7 g alumina (chemical purity, China National Pharmaceutical (Group) Shanghai Chemical Reagent Co., Ltd. ) were dissolved in 84.1 g tetraethylammonium hydroxide (35 wt% aqueous solution, Aladdin reagent (Shanghai) Co., Ltd.) and stirred until to be clear. 34.7g ethyl orthosilicate was added therein dropwise (chemical purity, China pharmaceutical (Group) Shanghai chemical reagent company) and stirred for 2 hours. The obtained solution was allowed to stand at 50 °C for 12 hours to perform aging, and then to stand at 70 °C for 2 days.

Preparation of synthetic gel: 0.7g sodium aluminate (Al₂O₃: 48.3wt%, Na₂O: 36.3wt%, China National Pharmaceutical (Group) Shanghai Chemical Reagent Company), 0.20 g sodium hydroxide, and 10.30 g N,N-dimethyl-3,5-dipropylpiperidine hydroxide (25wt%) were dissolved in 4.4g deionized water and stirred until to be clear. 13.3g silica sol (SiO₂: 30wt%, Shenyang Chemical Co., Ltd.) was added therein dropwise and stirred for 2 hours. Then 4.9g the above-mentioned directing agent was added therein and stirred for 3 hours.

Synthesis of high-silica Y molecular sieve: The synthetic gel was transferred into a stainless steel reactor, was placed at 120 °C for 5 days under autogenous pressure. Then the obtained solid was separated from liquid, washed to be neutrality, and dried at 100 °C for 12 hours. The obtained sample was denoted as sample Y1.

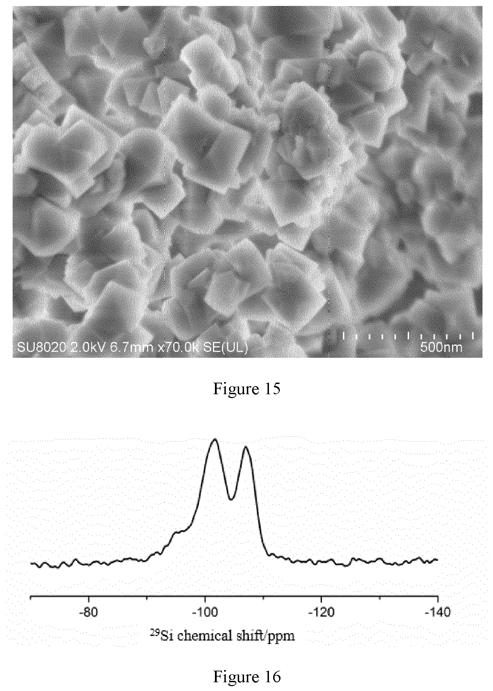

X-ray diffraction (XRD) spectrum of sample Y1 is shown in Figure 14, demonstrating that the sample Y1 is molecular sieve having FAU framework structure. Scanning electron microscope (SEM) image thereof is shown in Figure 15, demonstrating that the particles of sample Y1 are small pieces with a size ranging from 50 nm to 200 nm. ²⁹Si MAS NMR spectrum thereof is shown in Figure 16. The fitting calculation shows that the silica-alumina ratio in the framework is consistent with the calculation results conducted by XRF. According to the XRF and ¹³C MAS NMR normalization analysis, the element constitution of sample Y1 is 0.07Na· 0.02R1²· 0.05R2¹ (Si_{0.86}Al_{0.14})O₂, wherein, R1² is a tetraethylammonium hydroxide, R2¹ is N,N-dimethyl-3,5-dipropyl-piperidine hydroxide.

### Example 11: Preparation of samples Y2-Y30

The preparation process of any one of samples Y2-Y30 is the same as that of Example 10. The raw materials for preparing samples Y2-Y30, molar ratio thereof, crystallization conditions, crystal structure, and silica-alumina ratio (the silica-alumina ratio of the obtained product is measured by X-ray fluorescence analyzer (XRF)) are shown in Table 3. Aging temperature and time for preparing directing agent, addition amount of directing agent and sample constitution are shown in Table 10.

### Comparative Example 5: Preparation of Comparative Samples S1-S30

The specific preparation process is the same as that in the preparation of sample Y1 in Example 10, except that there is no directing agent preparation step, and there is not addition of directing agent in the subsequent gel synthesis step. The types of raw materials, molar ratio thereof, crystallization conditions and product structure of the prepared products are shown in Table 11. The samples obtained are denoted as comparative samples S1-S30.

### Comparative Example 6: Preparation of Comparative Samples T1-T30

The specific preparation process is the same as that in the preparation of sample Y1 in Example 10, except that, after the batching step of the directing agent is completed, only stirring at room temperature for 2 hours without aging was performed. Types of raw materials, molar ratio thereof, crystallization conditions, addition amount of directing agent, and product structure of each synthesized product are shown in Table 12. The samples obtained are denoted as comparative samples T1-T30.

### Example 12: Characterization and analysis of samples Y1-Y30 and comparative samples S1-S30 and T1-T30

The phases of samples Y1-Y30 and comparative samples S1-S30 and T1-T30 were analyzed by X-ray diffraction method.

The results show that each of samples Y1-Y30 prepared in Examples 10 and 11 is Y molecular sieve with both high purity and high crystallinity. The XRD spectrum of sample Y1 as typical representative is shown in Figure 14, SEM image thereof is shown in Figure 15, and Si NMR thereof is shown in Figure 16. The XRD spectrum result of any one of samples Y2-Y30 is close to Figure 14. In other words, the diffraction peak positions and shapes are substantially identical. The relative peak intensity fluctuates within ±5% depending on the change of synthesis conditions, demonstrating that any of samples Y1-Y30 has the structural characteristics of Y zeolite and has no impurities.

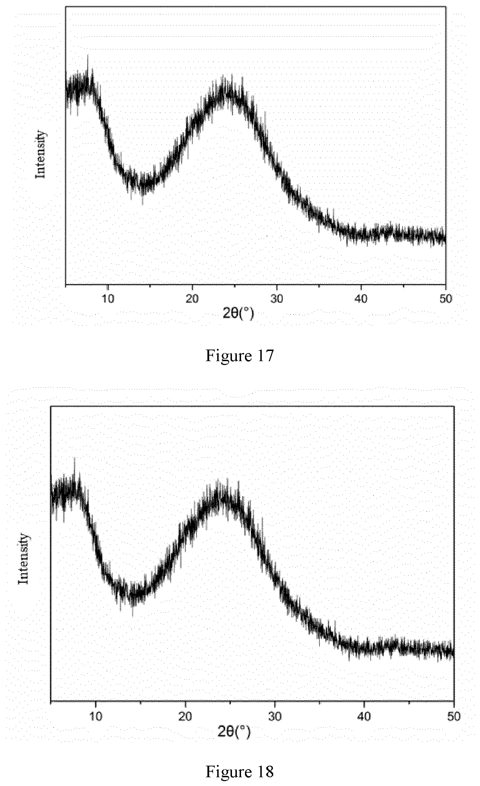

In tables 9 and 10, the comparative samples S1-S30 and the comparative samples T1-T30 are all amorphous. As a typical representative, the XRD spectra of the comparative sample S1 and the comparative sample T1 are shown in Figure 17 and Figure 18, respectively. It can be seen that during the synthesis of high-silica Y molecular sieve, the addition of a directing agent is necessary, and high-temperature aging must be carried out during preparation of the directing agent to induce crystallization, which is the key to the synthesis of high-silica Y molecular sieve.

**Table 9 Types of raw materials, molar ratio thereof, crystallization conditions, and crystal structure of samples Y1-Y30**

| Sam ple | Directing agent constitution | Initial gel constitution | Crystalli zation temperature | Crystallization manner /time | Crystal structure | Silica-Alumina ratio |
|---|---|---|---|---|---|---|
| Y1 | 10SiO₂¹:1Al₂O₃¹:1Na₂O:12R1²: 180H₂O | 20SiO₂¹:1Al₂O₃³:2.0Na₂O:3.6R2¹ :360H₂O | 130 °C | Dynamic 5 days | FAU | 12 |
| Y2 | 10SiO₂¹:1Al₂O₃¹:1Na₂O:10R1³: 180H₂O | 15SiO₂¹:1Al₂O₃³:1.8Na₂O:3R2¹:2 00H₂O | 130 °C | Static 4 days | FAU | 9 |
| Y3 | 30SiO₂:1Al₂O₃⁴:1.5Na₂O:30R1¹ :600H₂O | 20SiO₂¹:1Al₂O₃²:1.8Na₂O:4R2¹:4 00H₂O | 110°C | Dynamic 6 days | FAU | 11 |
| Y4 | 20SiO₂¹:1Al₂O₃¹:10R1³:8R1¹:4 00H₂O | 50SiO₂¹:1Al₂O₃¹:8.0Na₂O:9R2²:8 00H₂O ²:8 | 140°C | Dynamic 8 days | FAU | 15 |
| Y5 | 10SiO₂²:1Al₂O₃²:0.5Na₂O:10R1 ³:200H₂O | 20SiO₂²:1Al₂O₃²:3.0Na₂O:4R2²:4 00H₂O | 120°C | Static 6 days | FAU | 8 |
| Y6 | 10SiO₂²:1Al₂O₃²:0.5Na₂O:14R1 ²:200H₂O | 20SiO2²:1Al₂O3¹4.0Na₂O:4R2³:4 00H₂O | 130 °C | Static 3 days | FAU | 11 |
| Y7 | 10SiO₂²:1Al₂O₃¹:1Na₂O:10R1³: 180H₂O | 200SiO₂²:1Al₂O₃²:25Na₂O:40R2³ :3000H₂O | 120°C | Dynamic 8 days | FAU | 28 |
| Y8 | 30SiO2²:1Al₂O₃⁴:1.5Na₂O:35R1 ²:600H₂O | 50SiO₂²:1Al₂O₃²:8.0Na₂O:6R2³:8 00H₂O | 140 °C | Dynamic 6 days | FAU | 18 |
| Y9 | 30SiO₂²:1Al₂O₃⁴:1.0Na₂O:34R1 ⁴:600H₂O | 60SiO₂²:1Al₂O₃²: 9.0Na₂O:8R2³:900H₂O | 140 °C | Dynamic 6 days | FAU | 20 |
| Y10 | 15SiO₂³:1Al₂O₃¹:1.8Na₂O: 12R1¹: 180H₂O | 15SiO₂²:1Al₂O₃²:1.8Na₂O:4R2⁴:2 00H₂O | 120°C | Static 8 days | FAU | 9 |
| Y11 | 10SiO₂³:1Al₂O₃²:1Na₂O:10R1³: 180H₂O | 30SiO₂²:1Al₂O₃³:5.0Na₂O:6R2⁴:5 00H₂O | °C 120°C | Static 10 days | FAU | 13 |
| Y12 | 15SiO₂³:1Al₂O₃¹:1.8Na₂O: 12R1¹: 180H₂O | 20SiO₂²:1Al₂O₃¹:3.0Na₂O:5R2⁴:4 00H₂O | 120 °C | Static 12 days | FAU | 10 |
| Y13 | 10SiO₂³:1Al₂O₃²:1Na₂O:10R1³: 180H₂O | 30SiO₂²:1Al₂O₃¹:5.0Na₂O:6R2⁵:5 00H₂O | °C 100°C | Static 8 days | FAU | 13 |
| Y14 | 15SiO₂¹:1Al₂O₃³:1Na₂O:10R1¹: 200H₂O | 100SiO₂²:1Al₂O₃¹:12Na₂O:20R2⁵ :2000H₂O | 120°C | Dynamic 5 days | FAU | 20 |
| Y15 | 10SiO₂¹:1Al₂O₃³:2Na₂O:8R1³:1 00H₂O | 150SiO₂¹:1Al₂O₃²:15Na₂O:28R2⁵ :2800H₂O | 120°C | Dynamic 5 days | FAU | 25 |
| Y16 | 15SiO₂¹:1Al₂O₃²:15R1¹:250H₂ O | 80SiO₂¹:1Al₂O₃²:10Na₂O:15R2⁵: 1500H₂O | °C 110°C | Dynamic 5 days | FAU | 18 |
| Y17 | 30SiO₂¹:1Al₂O₃¹³:20R1¹:600H₂ O | 100SiO₂¹:1Al₂O₃³:12Na₂O:20R2⁶ :1800H₂O | 115 °C | Dynamic 5 days | FAU | 20 |
| Y18 | 5SiO₂¹:1Al₂O₃¹:1Na₂O:10R1¹:1 00H₂O | 60SiO₂¹:1Al₂O₃³:5Na₂O:12R2⁶:1 100H₂O | 130 °C | Dynamic 8 days | FAU | 15 |
| Y19 | 15SiO₂¹:1Al₂O₃¹:1.8Na₂O:12R1 ⁴:180H₂O | 45SiO₂¹:1Al₂O₃³:4Na₂O:8R2⁶:80 0H₂O | 120°C | Static 8 days | FAU | 14 |
| Y20 | 20SiO₂⁴:1Al₂O₃⁴:0.5Na₂O:18R1 ¹:400H₂O | 10SiO₂³:1Al₂O₃²:0.1Na₂O:4R2⁷:1 50H₂O | 90°C | Static 15 days | FAU | 7 |
| Y21 | 10SiO₂⁴:1Al₂O₃⁷:0.5Na₂O:8R1¹ :200H₂O | 15SiO₂³:1Al₂O₃²:1.8Na₂O:3R2⁷:2 00H₂O | 140°C | Static 5 days | FAU | 8 |
| Y22 | 15SiO₂²:1Al₂O₃⁷:0.5Na₂O:12R1 ³:280H₂O | 20SiO₂³:1Al₂O₃⁵:1.8Na₂O: 4R2⁸: 400H₂O | 110 °C | Static 5 days | FAU | 12 |
| Y23 | 12SiO₂¹:1Al₂O₃⁷:0.5Na₂O:10R1 ⁴:200H₂O | 50SiO₂³:1Al₂O₃⁵:5Na₂O:8R2⁸: 800H₂O | 120°C | Dynamic 6 days | FAU | 20 |
| Y24 | 20SiO₂⁴:1Al₂O₃⁵:0.5Na₂O:18R1 ¹:400H₂O | 20SiO₂³:1Al₂O₃⁶:4.0Na₂O: 4R2⁹: 400H₂O | 140 °C | Dynamic 5 days | FAU | 12 |
| Y25 | 10SiO₂¹:1Al₂O₃⁵:0.5Na₂O:8R1¹ :400H₂O | 15SiO₂⁴:1Al₂O₃⁶:3.0Na₂O:4R2⁹:2 80H₂O | °C 110°C | Dynamic 5 days | FAU | 10 |
| Y26 | 8SiO₂¹:1Al₂O₃⁵: 8R1¹:150H₂O | 100SiO₂⁴:1Al₂O₃⁷:10Na₂O:18R2^{1 0}:2000H₂O | 120°C | Dynamic 5 days | FAU | 20 |
| Y27 | 10SiO₂³:1Al₂O₃⁵:2Na₂O: 7R1¹: 180H₂O | 150SiO₂⁴:1Al₂O₃⁷:15Na₂O:30R2^{1 0}:2800H₂O | 120 °C | Dynamic 8 days | FAU | 30 |
| Y28 | 9SiO₂²:1Al₂O₃⁶:0.5Na₂O:8R1³: 150H₂O | 80SiO₂⁴:1Al₂O₃⁷:10Na₂O:15R2¹¹: 1500H₂O | 120°C | Dynamic 7 days | FAU | 16 |
| Y29 | 25SiO₂⁴:1Al₂O₃⁶:1Na₂O:8R1²:4 80H₂O | 40SiO₂⁴:1Al₂O₃⁷:5Na₂O:10R2¹¹:1 500H₂O | 120°C | Dynamic 5 days | FAU | 12 |
| Y30 | 30SiO₂⁴:1Al₂O₃⁶:3Na₂O:40R1¹: 600H₂O | 150SiO₂⁴:1Al₂O₃⁷:14Na₂O:25R2¹¹:2500H₂O | 120°C | Dynamic 6 days | FAU | 25 |

| | | | | | | |
|---|---|---|---|---|---|---|
| Note: Al₂O₃¹: Alumina; SiO₂¹: Silica sol; R1¹: Tetramethylammonium hydroxide; R2¹: N,N-dimethyl-3,5-dipropylpiperidine hydroxide; Al₂O₃²:Aluminum isopropoxide; SiO₂²: Ethyl orthosilicate; R1²:Tetraethylammonium hydroxide; R2²: N,N-diethyl-2,6-dimethylpiperidine hydroxide; Al₂O₃³:Sodium aluminate; SiO₂³: Fumed silica; R1³:Tetrapropylammonium hydroxide; R2³: N,N-diethyl-3,5-dipropylpiperidine hydroxide; Al₂O₃⁴: Aluminum nitrate; SiO₂⁴: Silica gel; R1⁴: Choline; R2⁴: N-ethyl-3 -butylpyridine Al₂O₃⁵: Aluminum tri-sec-butoxide; R2⁵ : N,N-diethyl-3,5-dipropylpiperidine hydroxide; Al₂O₃⁶: Aluminum sulfate; R2⁶: 1,4-dipropylpiperazine Al₂O₃⁷: Aluminum powder; R2⁷: N-methylpyridine; R2⁸ : N-ethyl-3 -butylpyridine R2⁹ : 1-ethyl-3-butylimidazole hydroxide R2¹⁰: 1-ethyl-4-butyl-5-methylpiperazine R2¹¹: 1 -ethyl-3 -butyl-4-propylimidazole hydroxide | | | | | | |

**Table 10 Aging temperature and time for preparing directing agent, addition amount of directing agent and sample constitution of samples Y1-Y30**

| Sample | Aging time for preparing directing agent | Addition amount of directing agent | Sample constitution |
|---|---|---|---|
| Y1 | 40 °C 5 days + 60 °C 4 days | 8% | 0.07Na 0.02R1² 0.05R2¹ (Si_{0.86}Al_{0.14})O₂ |
| Y2 | 120 °C 1day | 15% | 0.09Na 0.04R1³ 0.05R2¹ (Si_{0.82}Al_{0.18})O₂ |
| Y3 | 40 °C 1day +80 °C 4 days | 10% | 0.07K 0.03R1¹ 0.05R2¹ (Si_{0.85}Al_{0.15})O₂ |
| Y4 | 100 °C 2 days | 10% | 0.03Na 0.04R1¹ 0.05R2² (Si_{0.88}Al_{0.12})O₂ |
| Y5 | 90 °C 3 days | 20% | 0.08Na 0.04R1³ 0.08R2² (Si_{0.8}Al_{0.2})O₂ |
| Y6 | 80 °C 5 days | 10% | 0.07Na 0.04R1² 0.06R2³ (Si_{0.85}Al_{0.15})O₂ |
| Y7 | 40 °C 0.5 day+80 °C 2 days | 5% | 0.02Na 0.01R1¹ 0.04R2³ (Si_{0.93}Al_{0.07})O₂ |
| Y8 | 40 °C 0.5 day+60 °C 2 days | 8% | 0.03Na 0.04R1² 0.04R2³ (Si_{0.90}Al_{0.10})O₂ |
| Y9 | 30 °C 3 days +100 °C 2 days | 10% | 0.03Na 0.02R1⁴ 0.04R2³ (Si_{0.91}Al_{0.09})O₂ |
| Y10 | 30 °C 3 days +50 °C 8 days | 12% | 0.09Na 0.04R1¹ 0.05R2⁴ (Si_{0.82}Al_{0.18})O₂ |
| Y11 | 40 °C 15 days | 7% | 0.07Na 0.02R1³ 0.04R2⁴ (Si_{0.87}Al_{0.13})O₂ |
| Y12 | 30 °C 25 days | 5% | 0.09Na 0.02R1¹ 0.06R2⁴ (Si_{0.83}Al_{0.17})O₂ |
| Y13 | 100 °C 5 days | 15% | 0.09Na 0.02R1³ 0.05R2⁵ (Si_{0.84}Al_{0.16})O₂ |
| Y14 | 80 °C 7 days | 10% | 0.04Na 0.01R1¹ 0.04R2⁵ (Si_{0.91}Al_{0.09})O₂ |
| Y15 | 110 °C 1.5 days | 18% | 0.03Na 0.01R1³ 0.03R2⁵ (Si_{0.93}Al_{0.07})O₂ |
| Y16 | 90 °C 3 days | 18% | 0.04Na 0.02R1¹ 0.04R2⁵ (Si_{0.90}Al_{0.10})O₂ |
| Y17 | 80 °C 5 days | 18% | 0.03Na 0.02R1¹ 0.04R2⁶ (Si_{0.91}Al_{0.09})O₂ |
| Y18 | 60 °C 8 days | 8% | 0.06Na 0.02R1¹ 0.04R2⁶ (Si_{0.88}Al_{0.12})O₂ |
| Y19 | 40 °C 11 days | 11% | 0.06Na 0.02R1⁴ 0.04R2⁶ (Si_{0.88}Al_{0.12})O₂ |
| Y20 | 80 °C 7 days | 5% | 0.13Na 0.04R1¹ 0.05R2⁷ (Si_{0.78}Al_{0.22})O₂ |
| Y21 | 80 °C 7 days | 10% | 0.11Na 0.04R1¹ 0.05R2⁷ (Si_{0.80}Al_{0.20})O₂ |
| Y22 | 100 °C 5 days | 10% | 0.09Na 0.02R1³ 0.03R2⁸ (Si_{0.86}Al_{0.14})O₂ |
| Y23 | 110 °C 2 days | 10% | 0.03Na 0.02R1⁴ 0.04R2⁸ (Si_{0.91}Al_{0.09})O₂ |
| Y24 | 70 °C 7 days | 18% | 0.08Na 0.01R1¹ 0.05R2⁹ (Si_{0.86}Al_{0.14})O₂ |
| Y25 | 80 °C 5 days | 8% | 0.09Na 0.04R1¹ 0.04R2⁹ (Si_{0.83}Al_{0.17})O₂ |
| Y26 | 60 °C 8 days | 9% | 0.04Na 0.02R1¹ 0.03R2¹⁰ (Si_{0.91}Al_{0.09})O₂ |
| Y27 | 120 °C 1day | 20% | 0.02Na 0.01R1¹ 0.03R2¹⁰ (Si_{0.94}Al_{0.06})O₂ |
| Y28 | 110 °C 3 days | 10% | 0.04Na 0.04R1³ 0.03R2¹¹ (Si_{0.89}Al_{0.11})O₂ |
| Y29 | 110 °C 3 days | 10% | 0.06Na 0.03R1² 0.05R2¹¹ (Si_{0.86}Al_{0.14})O₂ |
| Y30 | 80 °C 7 days | 10% | 0.02Na 0.01R1¹ 0.04R2¹¹ (Si_{0.93}Al_{0.07})O₂ |

| | | | |
|---|---|---|---|
| Note: R1¹: tetramethylammonium hydroxide; R2¹: N,N-dimethyl-3,5 -dipropylpiperidine hydroxide R1²: Tetraethylammonium hydroxide; R2²: N,N-dietliyl-2,6-dimetliylpiperidine hydroxide R1³: Tetrapropylammonium hydroxide; R2³: N,N-diethyl-3,5 -dipropylpiperidine hydroxide R1⁴: Choline; R2⁴: N-ethyl-3-butylpyridine; R2⁵: N,N-diethyl-3,5 -dipropylpiperidine hydroxide; R2⁶: 1,4-dipropylpiperazine R2⁷: N-methylpyridine R2⁸:N-ethyl-3-butylpyridine R2⁹ : 1-ethyl-3-butylimidazole hydroxide R2¹⁰: 1-ethyl-4-butyl-5-methylpiperazine R2¹¹ : 1-ethyl-3-butyl-4-propylimidazole hydroxide | | | |

**Table 11 Types of raw materials, molar ratio thereof, crystallization conditions, and crystal structure of samples S1-S30**

| Sample | Initial gel constitution | Crystallization temperature | Crystallization time | Product |
|---|---|---|---|---|
| S1 | 20SiO₂¹:1Al₂O₃³:2.0Na₂O:3.6R2¹:360H₂O | 130 °C | Dynamic 5 | Amorphous |
| S2 | 15SiO₂¹:1Al₂O₃³:1.8Na₂O:3R2¹:200H₂O | 130 °C | Static 4 days | Amorphous |
| S3 | 20SiO₂¹:1Al₂O₃²:1.8Na₂O:4R2¹:400H₂O | 110 °C | Dynamic 6 | Amorphous |
| S4 | 50SiO₂¹:1Al₂O₃¹:8.0Na₂O:9R2²:800H₂O | 140 °C | Dynamic 8 | Amorphous |
| S5 | 20SiO₂² :1Al₂O₃²:3.0Na₂O:4R2²:400H₂O | 120 °C | Static 6 days | Amorphous |
| S6 | 20SiO₂² :1Al₂O₃¹:4.0Na₂O:4R2³:400H₂O | 130 °C | Static 3 days | Amorphous |
| S7 | 200SiO₂²:1Al₂O₃²:25 Na₂O:40R2³:3000H₂O | 120 °C | Dynamic days 8 | Amorphous |
| S8 | 50SiO₂² :1Al₂O₃² :8.0Na₂O:6R2³:800H₂O | 140 °C | Dynamic 6 | Amorphous |
| S9 | 60SiO₂²:1Al₂O₃²:9.0Na₂O:8R2³:900H₂O | 140 °C | Dynamic 6 | Amorphous |
| S10 | 15SiO₂² :1Al₂O₃² :1.8Na₂O:4R2⁴:200H₂O | 120 °C | Static 8 days | Amorphous |
| S11 | 30SiO₂² :1Al₂O₃³ :5.0Na₂O:6R2⁴:500H₂O | 120 °C | Static 10 days | Amorphous |
| S12 | 20SiO₂²:1Al₂O₃¹ :3.0Na₂O:5R2⁴:400H₂O | 120 °C | Static 12 days | Amorphous |
| S13 | 30SiO₂²:1Al₂O₃¹ :5.0Na₂O:6R2⁵:500H₂O | 120 °C | Static 8 days | Amorphous |
| S14 | 100SiO₂²:1Al₂O₃¹ :12Na₂O:20R2⁵:2000H₂O | 100 °C | Dynamic 5 | Amorphous |
| S15 | 150SiO₂¹:1Al₂O₃²:15Na₂O:28R2⁵:2800H₂O | 120 °C | Dynamic days 5 | Amorphous |
| S16 | 80SiO₂¹:1Al₂O₃²:10Na₂O:15R2⁵:1500H₂O | 110 °C | Dynamic 5 | Amorphous |
| S17 | 100SiO₂¹:1Al₂O₃³:12Na₂O:20R2⁶:1800H₂O | 115 °C | Dynamic days 5 | Amorphous |
| S18 | 60SiO₂¹:1Al₂O₃³:5Na₂O:12R2⁶:1100H₂O | 130 °C | Dynamic days 8 | Amorphous |
| S19 | 45SiO₂¹:1Al₂O₃³:4Na₂O:8R2⁶:800H₂O | 120 °C | Static 8 days | Amorphous |
| S20 | 15SiO₂³:1Al₂O₃²:1.8Na₂O:3R2⁷:200H₂O | 90 °C | Static 15 days | Amorphous |
| S21 | 20SiO₂³:1Al₂O₃⁵:1.8Na₂O:4R2⁸:400H₂O | 140 °C | Static 5 days | Amorphous |
| S22 | 50SiO₂³:1Al₂O₃⁵:5Na₂O: 8R2⁸: 800H₂O | 110 °C | Static 5 days | Amorphous |
| S23 | 20SiO₂³:1Al₂O₃⁶:4.0Na₂O: 4R2⁹:400H₂O | 120 °C | Dynamic 6 | Amorphous |
| S24 | 15SiO₂⁴:1Al₂O₃⁶:3.0Na₂O: 4R2⁹: 280H₂O | 140 °C | Dynamic days 5 | Amorphous |
| S25 | 100SiO₂⁴:1Al₂O₃⁷:10Na₂O:18R2¹⁰:2000H₂O | 110 °C | Dynamic days 5 | Amorphous |
| S26 | 150SiO₂⁴:1Al₂O₃⁷:15Na₂O:30R2¹⁰:2800H₂O | 120 °C | Dynamic days 5 | Amorphous |
| S27 | 80SiO₂⁴:1Al₂O₃⁷ :10Na₂O:15R2¹⁰:1500H₂O | 120 °C | Dynamic days 8 | Amorphous |
| S28 | 40SiO₂⁴:1Al₂O₃⁷:5Na₂O:10R2¹¹:1500H₂O | 120 °C | Dynamic days 7 | Amorphous |
| S29 | 150SiO₂⁴:1Al₂O₃⁷:14Na₂O:25R2¹¹:2500H₂O | 120 °C | Dynamic days 5 | Amorphous |
| S30 | 15SiO₂³:1Al₂O₃²:1.8Na₂O:3R2⁷:200H₂O | 120 °C | Dynamic 6 days | Amorphous |

| | | | | |
|---|---|---|---|---|
| Note: Al₂O₃¹: alumina; SiO₂¹: silica sol; R2¹: N,N-dimethyl-3,5-dipropylpiperidine hydroxide; Al₂O₃² : Aluminum isopropoxide; SiO₂²: Ethyl orthosilicate; R2²: N,N-diethyl-2,6-dimethylpiperidine hydroxide; Al₂O₃³:Sodium aluminate; SiO₂³: Fumed silica; R2³: N,N-diethyl-3,5-dipropylpiperidine hydroxide; Al₂O₃⁴: Aluminum nitrate; SiO₂⁴:Silica gel; R2⁴: N-ethyl-3-butylpyridine; Al₂O₃⁵: Aluminum tri-sec-butoxide; R2⁵: N,N-diethyl-3,5 -dipropylpiperidine hydroxide; Al₂O₃⁶: Aluminum sulfate; R2⁶: 1,4-dipropylpiperazine Al₂O₃⁷: Aluminum powder; R2⁷: N-methylpyridine; R2⁸: N-ethyl-3 -butylpyridine R2⁹: 1-ethyl-3-butylimidazole hydroxide R2¹⁰: 1 -ethyl-4-butyl-5-methylpiperazine R2¹¹ : 1 -ethyl-3 -butyl-4-propylimidazole hydroxid | | | | |

**Table 12 Types of raw materials, addition amount of directing agent, molar ratio thereof, crystallization conditions, and product structure of samples T1-T30**

| Sampl e | Directing agent constitution | addition amount of directing agent | Initial gel constitution | Crystallization temperature | Crystallization manner/time | Product structure |
|---|---|---|---|---|---|---|
| T1 | 10SiO₂¹:1Al₂O₃¹:1Na₂O: 12R1²:180H₂O | 8% | 20SiO₂¹:1Al₂O₃³:2.0Na₂O:3.6R2¹:3 60H₂O | °C 130 °C | Dynamic 5 days | Amorphous |
| T2 | 10SiO₂¹:1Al₂O₃1:1Na₂O: 10R1³:180H₂O | 15% | 15SiO₂¹:1Al₂O₃³:1.8Na₂O:3R2¹:20 0H₂O | °C 130 °C | Static 4 days | Amorphous |
| T3 | 30SiO₂:1Al₂O₃⁴:1.5Na₂O :30R1¹:600H₂O | 10% | 20SiO₂¹:1Al₂O₃²:1.8Na₂O:4R2¹:40 0H₂O | 110 °C | Dynamic 6 days | Amorphous |
| T4 | 20SiO₂¹:1Al₂O₃¹:10R1³:8 R1¹:400H₂O | 10% | 50SiO₂¹:1AlO₃¹:8.0Na₂O:9R2²:80 0H₂O | 140 °C | Dynamic 8 days | Amorphous |
| T5 | 10SiO₂²:1Al₂O₃²:0.5Na₂ O:10R1³:200H₂O | 20% | 20SiO₂²:1Al₂O₃²:3.0Na₂O:4R2²:40 0H₂O | 120°C | Static 6 days | Amorphous |
| T6 | 10SiO₂²:1Al₂O₃²:0.5Na₂ O:14R1²:200H₂O | 10% | 20SiO₂²:1Al₂O₃¹:4.0Na₂O:4R2³:40 0H₂O | °C 130 °C | Static 3 days | Amorphous |
| T7 | 10SiO₂²:1Al₂O₃¹:1Na₂O: 10R1³:180H₂O | 5% | 200SiO₂²:1Al₂O₃²:25Na₂O:40R2³:3 000H₂O | 120 °C | Dynamic 8 days | Amorphous |
| T8 | 30SiO₂²:1Al₂O₃⁴:1.5Na₂ O:35R1²:600H₂O | 8% | 50SiO₂²:1Al₂O₃²:8.0Na₂O:6R2³:80 0H₂O | 140 °C | Dynamic 6 days | Amorphous |
| T9 | 30SiO₂²:1Al₂O₃⁴:1.0Na₂ O:34R1⁴:600H₂O | 10% | 60SiO₂²:1Al₂O₃²:9.0Na₂O:8R2³:90 0H₂O | 140 °C | Dynamic 6 days | Amorphous |
| T10 | 15SiO₂³:1Al₂O₃¹:1.8Na₂ O: 12R1¹: 180H₂O | 12% | 15SiO₂²:1Al₂O₃²:1.8Na₂O:4R2⁴:20 0H₂O | °C 120 °C | Static 8 days | Amorphous |
| T11 | 10SiO₂³:1Al₂O₃²:1Na₂O: 10R1³:180H₂O | 7% | 30SiO₂²:1Al₂O₃³:5.0Na₂O:6R2⁴:50 0H₂O | °C 120 °C | Static 10 days | Amorphous |
| T12 | 15SiO₂³:1Al₂O₃¹:1.8Na₂ O: 12R1¹: 180H₂O | 5% | 20SiO₂²:1Al₂O₃¹:3.0Na₂O:5R2⁴:40 0H₂O | °C 120 °C | Static 12 days | Amorphous |
| T13 | 10SiO₂³:1Al₂O₃²:1Na₂O: 10R1³:180H₂O | 15% | 30SiO₂²:1Al₂O₃¹:5.0Na₂O:6R2⁵:50 0H₂O | °C 120 °C | Static 8 days | Amorphous |
| T14 | 15SiO₂¹:1Al₂O₃³:1Na₂O: 10R1¹:200H₂O | 10% | 100SiO₂²:1Al₂O₃¹:12Na₂O:20R2⁵:2 000H₂O | °C 100 °C | Dynamic 5 days | Amorphous |
| T15 | 10SiO₂¹:1Al₂O₃³:2Na₂O: 8R1³:100H₂O | 18% | 150SiO₂¹:1Al₂O₃²:15Na₂O:28R2⁵:2 800H₂O | °C 120 °C | Dynamic 5 days | Amorphous |
| T16 | 15SiO₂¹:1Al₂O₃²:15R1¹:2 50H₂O | 18% | 80SiO₂¹:1Al₂O₃²:10Na₂O:15R2⁵:15 00H₂O | 110 °C | Dynamic 5 days | Amorphous |
| T17 | 30SiO₂¹:1Al₂O₃¹³:20R1¹: 600H₂O | 18% | 100SiO₂¹:1Al₂O₃³:12Na₂O:20R2⁶:1 800H₂O | 115 °C | Dynamic 5 days | Amorphous |
| T18 | 5SiO₂¹:1Al₂O₃¹:1Na₂O:1 0R1¹:100H₂O | 8% | 60SiO₂¹:1Al₂O₃³:5Na₂O:12R2⁶:110 0H₂O | °C 130 °C | Dynamic 8 days | Amorphous |
| T19 | 15SiO₂¹:1Al₂O₃¹:1.8Na₂ O:12R1⁴:180H₂O | 11% | 45SiO₂¹:1Al₂O₃³:4Na₂O:8R2⁶:800 H₂O | °C 120 °C | Static 8 days | Amorphous |
| T20 | 20SiO₂⁴:1Al₂O₃⁴:0.5Na₂ O:18R1¹:400H₂O | 5% | 10SiO₂³:1Al₂O₃²:0.1Na₂O:4R2⁷:15 0H₂O | 90 °C | Static 15 days | Amorphous |
| T21 | 10SiO₂⁴:1Al₂O₃⁷:0.5Na₂ O:8R1¹:200H₂O | 10% | 15SiO₂³:1Al₂O₃²:1.8Na₂O:3R2⁷:20 0H₂O | °C 140 °C | Static 5 days | Amorphous |
| T22 | 15SiO₂²:1Al₂O₃⁷:0.5Na₂ O:12R1³:280H₂O | 10% | 20SiO₂³:1Al₂O₃⁵:1.8Na₂O:4R2⁸: 400H₂O | 110°C | Static 5 days | Amorphous |
| T23 | 12SiO₂¹:1Al₂O₃⁷:0.5Na₂ O:10R1⁴:200H₂O | 10% | 50SiO₂³:1Al₂O₃⁵:5Na₂O:8R2⁸: 800H₂O | 120 °C | Dynamic 6 days | Amorphous |
| T24 | 20SiO₂⁴:1Al₂O₃⁵:0.5Na₂ O:18R1¹:400H₂O | 18% | 20SiO₂³:1Al₂O₃⁶:4.0Na₂O:4R2⁹: 400H₂O | 140 °C | Dynamic 5 days | Amorphous |
| T25 | 10SiO₂¹:1Al₂O₃⁵:0.5Na₂ O:8R1¹:400H₂O | 8% | 15SiO₂⁴:1Al₂O₃⁶:3.0Na₂O:4R2⁹:28 0H₂O | 110 °C | Dynamic 5 days | Amorphous |
| T26 | 8SiO₂¹:1Al₂O₃⁵: 8R1¹:150H₂O | 9% | 100SiO₂⁴:1Al₂O₃⁷:10Na₂O:18R2¹⁰: 2000H₂O | °C 120 °C | Dynamic 5 days | Amorphous |
| T27 | 10SiO₂³:1Al₂O₃⁵:2Na₂O: 7R1¹: 180H₂O | 20% | 150SiO₂⁴:1Al₂O₃⁷:15Na₂O:30R2¹⁰: 2800H₂O | °C 120 °C | Dynamic 8 days | Amorphous |
| T28 | 9SiO₂:1Al₂O₃⁶:0.5Na₂O: 8R1³:150H₂O | 10% | 80SiO₂⁴:1Al₂O₃⁷:10Na₂O:15R2¹¹:1 500H₂O | 120 °C | Dynamic 7 days | Amorphous |
| T29 | 25SiO₂⁴:1Al₂O₃⁶:1Na₂O: 8R1²:480H₂O | 10% | 40SiO₂⁴:1Al₂O₃⁷:5Na₂O:10R2¹¹:15 00H₂O | 120 °C | Dynamic 5 days | Amorphous |
| T30 | 30SiO₂⁴:1Al₂O₃⁶:3Na₂O: 40R1¹:600H₂O | 10% | 150SiO₂⁴:1Al₂O₃:14Na₂O:25R2¹¹: 2500H₂O | °C 120 °C | Dynamic 6 days | Amorphous |

| | | | | | | |
|---|---|---|---|---|---|---|
| Note: Al₂O₃¹: Alumina; SiO₂¹ Silica sol; R1¹: Tetramethylammonium hydroxide; R2¹:N,N-dimethyl-3,5-dipropylpiperidine hydroxide; Al₂O₃²:Aluminum isopropoxide; SiO₂²: Ethyl orthosilicate; R1²:Tetraethylammonium hydroxide; R2²: N,N-diethyl-2,6-dimethylpiperidine hydroxide; Al₂O₃³:Sodium aluminate; SiO₂³: Fumed silica; R1³:Tetrapropylammonium hydroxide; R2³: N,N-diethyl-3,5-dipropylpiperidine hydroxide; Al₂O₃⁴: Aluminum nitrate; SiO₂⁴: Silica gel; R1⁴: Choline; R2⁴: N-ethyl-3 -butylpyridine Al₂O₃⁵: Aluminum tri-sec-butoxide; R2⁵ : N,N-diethyl-3,5 -dipropylpiperidine hydroxide; Al₂O₃⁶: Aluminum sulfate; R2⁶: 1,4-dipropylpiperazine Al₂O₃⁷: Aluminum powder; R2⁷: N-methylpyridine; R2⁸ : N-ethyl-3 -butylpyridine R2⁹ : 1 -ethyl-3-butylimidazole hydroxide R2¹⁰: 1-ethyl-4-butyl-5-methylpiperazine R2¹¹: 1 -ethyl-3 -butyl-4-propylimidazole hydroxide | | | | | | |

The above examples are only illustrative, and do not limit the present application in any form. Any change or modification, made by the skilled in the art based on the technical content disclosed above, without departing from the spirit of the present application, is equivalent example and falls within the scope of the present application.

## Claims

1. A high-silica Y molecular sieve having FAU topology, wherein the anhydrous chemical constitution of the molecular sieve is as shown in formula I:
kM·mR1·nR2·(SiₓAl_{y})O₂ Formula I
wherein, M is at least one of alkali metal elements;
R1 and R2 represent organic templating agents;
k represents the number of moles of alkali metal element M per mole (SiₓAl_{y})O₂, k=0∼0.20;
m and n represent the number of moles of templating agents R1 and R2 per mole of (SiₓAl_{y})O₂,m=0∼0.20, n=0.01∼0.20;
x and y respectively represent the mole fractions of Si and Al, 2x/y=7∼40, and x+y=1;
R1 and R2 are independently one of nitrogen-containing heterocyclic compounds and derivatives thereof, and quaternary ammonium compounds;
a structural formula of the quaternary ammonium compound is as shown in formula II; 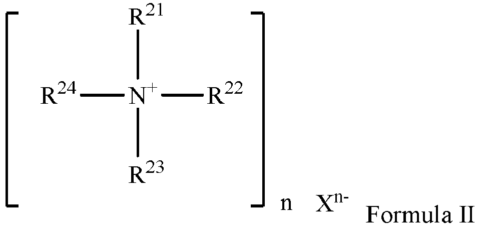
in formula II, R²¹, R²², R²³ and R²⁴ are independently at least one of C₁∼C₁₂ alkyl, C₁∼C₁₂ alkoxy, C∼C₁₂ hydroxyalkyl, aryl and adamantyl;
Xⁿ⁻ is one of OH⁻, Cl⁻, Br⁻, I⁻, NO₃, HSO₄, H₂PO₃⁻, SO₄²⁻, HPO₃²⁻, and PO₃³⁻.

2. The high-silica Y molecular sieve having FAU topology according to claim 1, wherein M is at least one of Na, K, and Cs, and 2x/y=7∼30.

3. The high-silica Y molecular sieve having FAU topology according to claim 1, wherein M is at least one of Na, K, and Cs, and 2x/y=8∼30.

4. The high-silica Y molecular sieve having FAU topology according to claim 1, wherein R1 and R2 are independently at least one of quaternary ammonium compounds;
preferably, R1 and R2 are independently at least one of tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutylammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

5. The high-silica Y molecular sieve having FAU topology according to claim 1, wherein R1 is at least one of tetramethylammonium hydroxide, tetraethylammonium hydroxide, tetrapropylammonium hydroxide and choline,
R2 is at least one of tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutyl ammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

6. The high-silica Y molecular sieve having FAU topology according to claim 1, wherein R1 is at least one of quaternary ammonium compounds; R2 is at least one of nitrogen-containing heterocyclic compounds and derivatives thereof.

7. The high-silica Y molecular sieve having FAU topology according to claim 1, wherein R1 is at least one of tetramethylammonium hydroxide, tetraethylammonium hydroxide, tetrapropylammonium hydroxide and choline, and R2 is at least one of nitrogen-containing heterocyclic compounds and derivatives thereof.

8. The high-silica Y molecular sieve having FAU topology according to claim 7, wherein R2 is at least one of pyridine, N-methylpyridine, N-ethylpyridine, N-propylpyridine, N-butylpyridine, N-ethyl-3-butylpyridine, 1-ethyl-2-propylpyridine hydroxide, piperidine, N,N-dimethylpiperidine, N,N-dimethyl-3,5-diethylpiperidine hydroxide, N,N-dimethyl-3,5-dipropylpiperidine hydroxide, N,N-diethyl-3,5-dipropylpiperidine hydroxide, N,N-diethyl-2,6-dimethylpiperidine hydroxide, N,N-dimethyl-2,6-diethylpiperidine hydroxide, imidazole, 1-ethyl-3 -butylimidazole hydroxide, 1-ethyl-3 -butyl-4-propylimidazole hydroxide, 1-benzyl-3-methylimidazole hydroxide, 1-benzyl-3-ethylimidazole hydroxide, 1-benzyl-3-butylimidazole hydroxide, piperazine, N-methylpiperazine, 1,4-dipropylpiperazine, 1-methyl-4-ethylpiperazine, and 1-ethyl-4-butyl-5-methylpiperazine.

9. The high-silica Y molecular sieve having FAU topology according to claim 1, wherein k=0.01∼0.15; m=0.01∼0.1; n=0.02∼0.15.

10. The high-silica Y molecular sieve having FAU topology according to claim 1, wherein k=0.02∼0.13; m=0.01∼0.04; n=0.03∼0.08.

11. A method for preparing high-silica Y molecular sieve having FAU topology comprising following steps:
a) mixing raw materials containing aluminum source, silicon source, alkali metal source, organic templating agent R and water to prepare an initial gel mixture I, wherein the aluminum source, silicon source, alkali metal source, organic templating agent R and water in the raw materials have the following molar ratios:
SiO₂ /Al₂O₃ =10∼200;
M₂O/Al₂O₃=0∼30, wherein M is at least one of alkali metal elements;
R/Al₂O₃=1∼45;
H₂O/Al₂O₃=50∼8000;
b) adding silica-alumina molecular sieve seed crystal having FAU or EMT topology to the initial gel mixture I obtained in step a) to obtain a mixture II;
c) placing the mixture II obtained in step b) in a sealed reactor to perform crystallization to obtain the high-silica Y molecular sieve having FAU topology;
wherein, the number of moles of silicon source is calculated by SiO₂; the number of moles of aluminum source is calculated by Al₂O₃; the number of moles of templating agent R is calculated by the number of moles of R itself; and the number of moles of alkali metal source is calculated by the number of moles of corresponding metal oxide M₂O.

12. The method according to claim 11, wherein, in step a), H₂O/Al₂O₃=50∼6000; preferably, in step a), H₂O/Al₂O₃=100∼8000;
preferably, in step a), R/Al₂O₃=0.1-25.

13. The method according to claim 11, wherein, in step a),
the organic templating agent R is at least one of nitrogen-containing heterocyclic compounds and derivatives thereof, and quaternary ammonium compounds;
the structural formula of the quaternary ammonium compound is as shown in formula II; 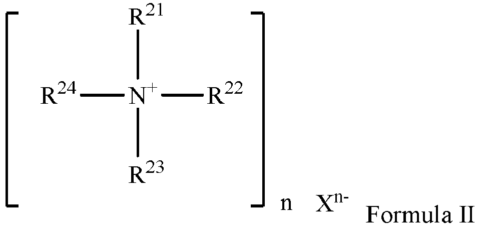
in formula II, R²¹, R²², R²³ and R²⁴ are independently at least one of C₁∼C₁₂ alkyl, C₁∼C₁₂ alkoxy, C₁∼C₁₂ hydroxyalkyl, aryl and adamantyl;
Xⁿ⁻ is one of OH⁻, Cl⁻, Br⁻, I⁻, NO₃⁻, HSO₄-, H₂PO₃⁻, SO₄²⁻, HPO₃²⁻, and PO₃³⁻.

14. The method according to claim 11, wherein the organic templating agent R in step a) is at least one of tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutyl ammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

15. The method according to claim 11, wherein the nitrogen-containing heterocyclic templating agent R in step a) is at least one of nitrogen-containing heterocyclic compounds and derivatives thereof.

16. The method according to claim 11, wherein the nitrogen-containing heterocyclic templating agent R in step a) is at least one of pyridine, N-methylpyridine, N-ethylpyridine, N-propylpyridine, N-butylpyridine, N-ethyl-3-butylpyridine, 1-ethy1-2-propylpyridine hydroxide, piperidine, N,N-dimethylpiperidine, N,N-dimethyl-3,5-diethylpiperidine hydroxide, N,N-dimethyl-3,5-dipropylpiperidine hydroxide, N,N-diethyl-3,5-dipropylpiperidine hydroxide, N,N-diethyl-2,6-dimethylpiperidine hydroxide, N,N-dimethyl-2,6-diethylpiperidine hydroxide, imidazole, 1-ethyl-3-butylimidazole hydroxide, 1-ethyl-3-butyl-4-propylimidazole hydroxide, 1-benzyl-3-methylimidazole hydroxide, 1-benzyl-3-ethylimidazole hydroxide, 1-benzyl-3-butylimidazole hydroxide, piperazine, N-methylpiperazine, 1,4-dipropylpiperazine, 1-methyl-4-ethylpiperazine, and 1-ethyl-4-butyl-5-methylpiperazine.

17. The method according to claim 11, wherein the silicon source in step a) is at least one of methyl orthosilicate, ethyl orthosilicate, silica sol, solid silica gel, fumed silica, and sodium silicate;
the aluminum source in step a) is at least one of sodium aluminate, aluminum oxide, aluminum hydroxide, aluminum isopropoxide, aluminum 2-butoxide, aluminum chloride, aluminum sulfate, aluminum nitrate, and pseudo-boehmite;
the alkali metal source in step a) is at least one of sodium hydroxide, potassium hydroxide, and cesium hydroxide.

18. The method according to claim 11, wherein step a) comprises mixing the aluminum source, the alkali metal source, the organic templating agent R and water, and then adding the silicon source to mix to obtain the initial gel mixture I.

19. The method according to claim 11, wherein the aluminum source, silicon source, alkali metal source, organic templating agent R and water in the raw materials in step a) have the following molar ratios:
SiO₂ /Al₂O₃ =10∼200;
M₂O/Al₂O₃=0∼30, wherein M is at least one of alkali metal elements;
R/Al₂O₃=1∼45;
H₂O/Al₂O₃=100∼6000.

20. The method according to claim 11, wherein a weight ratio of silica alumina molecular sieve seed crystal having FAU or EMT topology added in the mixture II in step b), to the silicon source in the initial gel mixture I ranges from 0.01:1 to 0.3:1;
wherein, the weight of the silicon source in the initial gel mixture I is calculated by the weight of SiO₂.

21. The method according to claim 11, wherein a silica-alumina molar ratio SiO₂/Al₂O₃ of the silica-alumina molecular sieve seed crystal having FAU or EMT topology in step b) is 2∼∞.

22. The method according to claim 11, wherein a silica-alumina molar ratio SiO₂/Al₂O₃ of the silica-alumina molecular sieve seed crystal having FAU or EMT topology in step b) ranges from 2.5 to 200.

23. The method according to claim 11, wherein a crystallization temperature in step c) ranges from 90 to 180 °C, and a crystallization time in step c) ranges from 0.1 to 15 days.

24. The method according to claim 11, wherein the crystallization in step c) is performed dynamically or statically.

25. A method for preparing high-silica Y molecular sieve having FAU topology, comprising following steps:
a) mixing raw materials I containing aluminum source A¹, silicon source Si¹, alkali metal source M¹, organic templating agent R¹ and water, and aging to obtain a directing agent;
wherein, the aluminum source A¹, silicon source Si¹, alkali metal source M¹, organic templating agent R¹ and water in the raw materials I have the following molar ratios:
SiO₂ /Al₂O₃ =5∼30;
m¹₂O/Al₂O₃=0∼7, wherein M¹ is at least one of alkali metal elements;
R¹/Al₂O₃=1∼40;
H₂O/Al₂O₃= 100∼600;
b) mixing raw materials II containing aluminum source A², silicon source Si², alkali metal source M², organic templating agent R², and water to prepare an initial gel;
wherein, the aluminum source A², silicon source Si², alkali metal source M², organic templating agent R² and water in the raw materials II have the following molar ratios:
SiO₂ /Al₂O₃ =10∼200;
M²₂O/Al₂O₃=0∼30, wherein .M² is at least one of alkali metal elements;
R²/Al₂O₃ =1∼45;
H₂O/Al₂O₃= 100∼8000;
c) adding the directing agent in step a) to the initial gel in step b) and, after mixing uniformly, placing the obtained mixture in a sealed reactor for crystallization to obtain the high-silica Y molecular sieve having FAU topology;
wherein, the number of moles of silicon source Si¹ and Si² is respectively calculated by SiO₂; the number of moles of aluminum source A¹ and A² is respectively calculated by Al₂O₃; the number of moles of templating agent R¹ and R² is respectively calculated by the number of moles of themselves; and the number of moles of alkali metal source M¹ and M² is respectively calculated by the number of moles of corresponding metal oxide M¹₂O and M²₂O.

26. The method according to claim 25, wherein the aluminum source A¹, silicon source Si¹, alkali metal source M¹, organic templating agent R¹ and water in the raw materials I in step a) have the following molar ratios:
SiO₂ /Al₂O₃ =5∼30;
M₂O/Al₂O₃=0∼3, wherein M¹ is at least one of alkali metal elements;
R¹/Al₂O₃=5∼40;
H₂O/Al₂O₃=100∼600.

27. The method according to claim 25, wherein, the aluminum source A², silicon source Si², alkali metal source M², organic templating agent R², and water in the raw material II in step b) have the following molar ratios:
SiO₂ /Al₂O₃ =10∼200;
M²₂O/Al₂O₃=0∼30, wherein .M² is at least one of alkali metal elements;
R²/Al₂O₃ =1∼45;
H₂O/Al₂O₃=100∼4000.

28. The method according to claim 25, wherein the silicon sources Si¹ and Si² in step a) and step b) are independently at least one of methyl orthosilicate, ethyl orthosilicate, silica sol, solid silica gel, fumed silica, and sodium silicate;
the aluminum sources A¹ and A² in step a) and step b) are independently at least one of sodium aluminate, aluminum oxide, aluminum hydroxide, aluminum isopropoxide, aluminum 2-butoxide, aluminum chloride, aluminum sulfate, aluminum nitrate and pseudo-boehmite;
the alkali metal sources M¹ and M² in step a) and step b) are independently at least one of sodium hydroxide, potassium hydroxide, and cesium hydroxide.

29. The method according to claim 25, wherein the organic templating agents R¹ and R² in step a) and step b) are independently one of nitrogen-containing heterocyclic compounds and derivatives thereof, and quaternary ammonium compounds;
the structural formula of the quaternary ammonium compound is as shown in formula II; 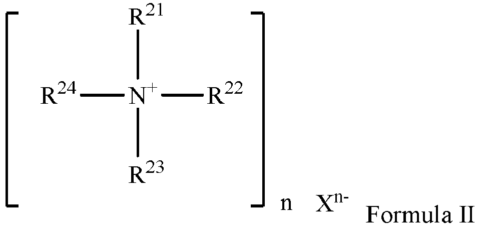
in formula II, R²¹, R²², R²³ and R²⁴ are independently at least one of C₁-C₁₂ alkyl, C₁-C₁₂ alkoxy, C₁-C₁₂ hydroxyalkyl, aryl and adamantyl; Xⁿ⁻ is one of OH⁻, Cl⁻, Br⁻, I⁻, NO₃ , HSO₄ , H₂PO₃⁻, SO₄²⁻, HPO₃²⁻, and PO₃³⁻.

30. The method according to claim 25, wherein R¹ and R² are independently at least one of tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutylammonium bromide, tributyl-cyclohexylammonium hydroxide, dibutyl-dihexylammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

31. The method according to claim 25, wherein R¹ is at least one of tetramethylammonium hydroxide, tetraethylammonium hydroxide, tetrapropylammonium hydroxide, and choline;
R² is at least one of tetraethylammonium hydroxide, tetrapropylammonium hydroxide, tetrabutylammonium hydroxide, tetrapentylammonium hydroxide, tetrahexylammonium hydroxide, tetrapropylammonium bromide, tetrabutylammonium chloride, tetrapentylammonium bromide, tripropyl-isobutylammonium bromide, tributyl-cyclohexylammonium hydroxide, dibutyl-dihexyl ammonium hydroxide, choline, triethyl-hydroxyethyl ammonium hydroxide, tripropyl-hydroxyethyl ammonium hydroxide, tributyl-hydroxyethyl ammonium hydroxide, tributyl-benzyl ammonium hydroxide, triethyl-benzyl ammonium hydroxide, tripropyl-benzyl ammonium hydroxide, N,N,N-triethyl-adamantyl ammonium chloride, and N,N,N-tripropyl-adamantyl ammonium chloride.

32. The method according to claim 25, wherein R¹ is one of quaternary ammonium compounds;
the structural formula of the quaternary ammonium compound is as shown in formula II; 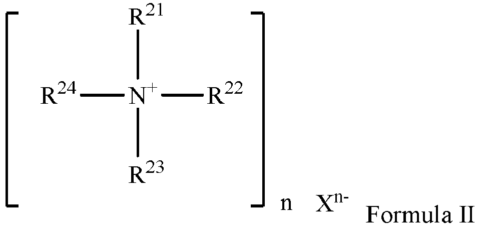
in formula II, R²¹, R²², R²³ and R²⁴ are independently at least one of C₁∼C₁₂ alkyl, C₁∼C₁₂ alkoxy, C₁∼C₁₂ hydroxyalkyl, aryl and adamantyl; Xⁿ⁻ is one of OH⁻, Cl⁻, Br⁻, I⁻, NO³ , HSO₄⁻ , H₂PO₃⁻, SO₄²⁻ , HPO₃²⁻ , and PO₃³⁻ ;
R² is at least one of nitrogen-containing heterocyclic compounds and derivatives thereof.

33. The method according to claim 32, wherein R¹ is at least one of tetramethylammonium hydroxide, tetraethylammonium hydroxide, tetrapropylammonium hydroxide and choline.

34. The method according to claim 32, wherein R² is at least one of pyridine, N-methylpyridine, N-ethylpyridine, N-propylpyridine, N-butylpyridine, N-ethyl-3-butylpyridine, 1-ethyl-2-propylpyridine hydroxide, piperidine, N,N-dimethylpiperidine, N,N-dimethyl-3,5-diethylpiperidine hydroxide, N,N-dimethyl-3,5-dipropylpiperidine hydroxide, N,N-diethyl-3,5-dipropylpiperidine hydroxide, N,N-diethyl-2,6-dimethylpiperidine hydroxide, N,N-dimethyl-2,6-diethylpiperidine hydroxide, imidazole, 1-ethyl-3-butylimidazole hydroxide, 1-ethyl-3-butyl-4-propylimidazole hydroxide, 1-benzyl-3-methylimidazole hydroxide, 1-benzyl-3-ethylimidazole hydroxide, 1-benzyl-3-butylimidazole hydroxide, piperazine, N-methylpiperazine, 1,4-dipropylpiperazine, 1-methyl-4-ethylpiperazine, and 1-ethyl-4-butyl-5-methylpiperazine.

35. The method according to claim 25, wherein an aging temperature in step a) ranges from 25 to 140 °C for an aging time in a range from 0.5 to 30 days.

36. The method according to claim 25, wherein an aging temperature in step a) ranges from 25 to 140 °C for an aging time in a range from 1 to 30 days.

37. The method according to claim 25, wherein an aging temperature in step a) ranges from 30 to 120 °C for an aging time in a range from 1 to 25 days.

38. The method according to claim 25, wherein the aging in step a) is a two-stage aging, a temperature for a first stage aging ranges from 30 to 40 °C, a time for the first stage aging ranges from 0.5 to 5 days while a temperature for the second stage aging ranges from 50 to 100 °C, and a time for first-stage aging ranges from 2 to 8 days.

39. The method according to claim 25, wherein step a) comprises: mixing the aluminum source A¹, the alkali metal source M¹, the organic templating agent R¹ and water uniformly, adding the silicon source S¹ therein, stirring, mixing and then aging, wherein an aging temperature ranges from 25 to 140 °C, and an aging time ranges from 1 to 30 days to obtain the directing agent.

40. The method according to claim 25, wherein the aluminum source A², the silicon source Si², the alkali metal source M², the organic templating agent R², and water in step b) have the following molar ratios:
SiO₂ /Al₂O₃ =10∼200;
M²₂O/Al₂O₃=0∼30, wherein .M² is at least one of alkali metal elements;
R²/Al₂O₃ =1∼45;
H₂O/Al₂O₃=100∼6000.

41. The method according to claim 25, wherein, a weight ratio of silica in the directing agent to silica in the initial gel in step c) ranges from 0.01:1 to 0.3:1.

42. The method according to claim 25, wherein, a weight ratio of silica in the directing agent to silica in the initial gel in step c) ranges from 0.01:1 to 0.2:1.

43. The method according to claim 25, wherein a crystallization temperature in step c) ranges from 90 to 180 °C for a crystallization time in a range from 1 to 15 days.

44. The method according to claim 25, wherein a crystallization temperature in step c) ranges from 90 to 140 °C for a crystallization time in a range from 3 to 15 days.

45. The method according to claim 25, wherein the crystallization in step c) is performed dynamically and/or statically.
